# EUROPÄISCHE PATENTSCHRIFT

(11) **EP 3 598 059 B1**
(45) Veröffentlichungstag und Bekanntmachung des Hinweises auf die Patenterteilung: **09.04.2025**
(21) Anmeldenummer: 19186617.7
(22) Anmeldetag: 16.07.2019
(51) Int. Cl.: G01B 11/00, G01B 21/04

(54) **VERFAHREN UND ANORDNUNG ZUM ERFASSEN EINES KALIBRIEROBJEKTS MIT EINER OPTISCHEN SENSOREINRICHTUNG**
METHOD AND ARRANGEMENT FOR DETECTING A CALIBRATING OBJECT WITH AN OPTICAL SENSOR DEVICE
PROCÉDÉ ET AGENCEMENT DE DÉTECTION D'UN OBJET D'ÉTALONNAGE À L'AIDE D'UN DISPOSITIF CAPTEUR OPTIQUE

(30) Priorität: 16.07.2018 DE 102018211813
(43) Veröffentlichungstag der Anmeldung: 22.01.2020
(73) Patentinhaber: Carl Zeiss Industrielle Messtechnik GmbH, 73447 Oberkochen (DE)
(72) Erfinder: Göhnermeier, Aksel, 73457 Essingen (DE); Köder, Stefan, 73492 Rainau-Dalkingen (DE); Schäffauer, Kai, 81543 München (DE)
(74) Vertreter: Patentanwälte Bressel und Partner mbB

(56) Entgegenhaltungen:
- CN-A- 107 843 213
- DE-A1- 102006 017 401
- DE-A1- 102015 217 637
- US-B1- 7 436 520
- ZOU XICONG ET AL: "Non-contact on-machine measurement using a chromatic confocal probe for an ultra-precision turning machine", THE INTERNATIONAL JOURNAL OF ADVANCED MANUFACTURING TECHNOLOGY, SPRINGER, LONDON, vol. 90, no. 5, 10 October 2016 (2016-10-10), pages 2163 - 2172, XP036227824, ISSN: 0268-3768, [retrieved on 20161010], DOI: 10.1007/S00170-016-9494-3

## Beschreibung

Die Erfindung betrifft ein Verfahren und eine Anordnung zum Erfassen eines Kalibrierobjekts mit einer optischen Sensoreinrichtung und insbesondere das Kalibrieren der Sensoreinrichtung basierend auf dieser Erfassung.

Es ist bekannt, optische Sensoreinrichtungen zur Objekterfassung zu verwenden, beispielsweise um Objekte dreidimensional zu vermessen. Insbesondere können dreidimensionale Koordinaten von Objektpunkten ermittelt werden, wobei diese Koordinaten durch optisches Abtasten des Objekts mittels der Sensoreinrichtung gewonnen werden können. Weiter ist es bekannt, in diesem Zusammenhang die optische Sensoreinrichtung an einem Positioniersystem anzubringen und relativ zu dem Objekt zu bewegen. Bei dem Positioniersystem kann es sich um einen Gelenkarm oder Roboter handeln und/oder um ein Koordinatenmessgerät. Insbesondere kann die Relativbewegung mittels einer Maschinenkinematik z.B. eines Koordinatenmessgeräts erzeugt werden, die mehrere mittels einer jeweiligen Antriebseinrichtung bewegbare Maschinenachsen umfasst, welche die Sensoreinrichtung im Raum positionieren können. Das Koordinatenmessgerät kann beispielsweise in Portalbauweise oder Gantrybauweise ausgebildet sein und die Sensoreinrichtung relativ zu einer ruhenden Basis bewegen, auf der das Objekt angeordnet ist. Zusätzlich oder alternativ kann die Sensoreinrichtung an Bewegungsachsen insbesondere in Form einer sogenannten Dreh-/ Schwenkeinrichtung angeordnet sein, welche z. B. selbst über weitere Achsen des Koordinatenmessgeräts im Raum positionierbar sind. Für das Erfassen der Koordinatenwerte können die eingenommenen Achspositionen (d.h. die Achspositionswerte) der einzelnen Maschinenachsen erfasst und/oder ausgewertet werden. Zusätzlich oder alternativ kann das Objekt mittels eines Positioniersystems bewegt werden, welches das Objekt relativ zu einer stationären oder ebenfalls bewegbaren Sensoreinrichtung bewegt. Ein solches Positioniersystem kann beispielsweise ein Drehtisch oder auch ein sogenannter X-/Y-Messtisch sein, der in zwei senkrecht zueinander verlaufenden Bewegungsrichtungen beweglich ist.

Ein Beispiel für ein Positioniersystem in Form eines Koordinatenmessgeräts, bei der sowohl das Objekt als auch die Sensoreinrichtung aktiv bewegbar sind, ist die Baureihe O-INSPECT der Carl-Zeiss Industrielle Messtechnik GmbH, Oberkochen (Deutschland). Bei dieser Variante wird das Objekt auf einem beweglichen X-/Y-Messtisch platziert und die Sensoreinrichtung ist in einer zu den Bewegungsrichtungen dieses Messtisches orthogonalen Z-Richtung bewegbar. Sämtliche der vorstehend genannten Varianten von Positioniersystemen und Koordinatenmessgeräten können auch bei der vorliegenden Erfindung vorgesehen sein.

Eine Klasse von optischen Sensoreinrichtungen zur Objekterfassung betrifft Sensoreinrichtungen, die elektromagnetische Strahlung zum Beispiel in Form von Licht umfassend Strahlungsanteile mehrerer Wellenlängen oder in Form von im Wesentlichen monochromer und/oder kohärenter Strahlung und insbesondere Laserstrahlung entlang einer Sensorachse aussenden und wenigstens eine Fokusposition auf der Sensorachse aufweisen. Weiter können derartige Sensoren in der Regel anhand einer erfassten rückreflektierten Strahlung sowie in Abhängigkeit einer Relativanordnung eines Objekts zu der Fokusposition (zum Beispiel einem Abstand hierzwischen insbesondere entlang der Sensorachse) Messsignale erzeugen. Bei der elektromagnetischen Strahlung muss es sich nicht notwendigerweise um sichtbare Strahlung handeln.

Ein Beispiel für einen derartigen Sensor ist eine interferometrische Sensoreinrichtung, bei der Interferenzen zwischen von einem Objekt reflektierter Strahlung und einer in der Regel innerhalb der Sensoreinrichtung ausgekoppelten Referenzstrahlung ermittelt werden, um daraus Abstandsinformationen zu ermitteln. In diesem Fall kann Strahlung zunächst in einem Lichtleiter geführt werden und kann die Referenzstrahlung z. B. an einem Austrittsbereich aus der Sensoreinrichtung oder dem Lichtleiter ausgekoppelt werden. Weiter kann von dem Objekt reflektierte Strahlung wieder in den Lichtleiter eingekoppelt und/oder zum Überlagern mit der Referenzstrahlung zu einer Auswerteeinheit geführt werden. Allgemein kann in diesem Fall ein Messbereich um eine Fokusposition der in die Umgebung gesendeten Strahlung definiert sein, innerhalb dem auswertbare Signale erzeugt werden können. Ein Beispiel für eine solche Sensoreinrichtung findet sich in der DE 102 46 798 B3.

Die Sensorachse kann zum Beispiel eine Achse einer Lochblende sein, durch die die elektromagnetische Strahlung hindurchtritt bzw. austritt. Bei dieser Achse kann es sich um eine konzentrisch durch den Mittelpunkt sowie orthogonal zu einer Durchtrittsöffnung der Lochblende verlaufende Achse handeln, d. h. um eine Mittelpunkts- und/oder Durchtrittsachse. Die Lochblende kann Bestandteil einer Optik (Sensoroptik) der Sensoreinrichtung sein und allgemein durch den Austrittsbereich und/oder die Austrittsöffnung aus einem Lichtleiter gebildet werden, in der die elektromagnetische Strahlung geführt ist. Der Lichtleiter kann eine optische Faser sein, zum Beispiel eine Glasfaser. Aus der Lochblende austretende Strahlung kann mittels weiterer optischer Elemente der Sensoroptik wie zum Beispiel einer Sammellinse, auf der Sensorachse zusammengeführt und somit fokussiert werden. Die Sensoroptik kann somit insbesondere eine Fokussieroptik sein. Die Fokusposition kann einem Punkt entsprechen, an dem von der Sensoroptik zusammengeführte Strahlen auf der Sensorachse zusammentreffen und insbesondere, an der sämtliche die Sensoroptik in einer Austrittsrichtung durchlaufende Strahlen zusammengeführt werden.

Von der Objektoberfläche rückreflektierte Strahlung kann (in entgegengesetzter Richtung zu von der Sensoreinrichtung ausgesendeten Strahlung) die Sensoroptik durchlaufen und hiervon auf die Lochblende gerichtet werden. Insbesondere kann sie hierüber zumindest teilweise wieder in den Lichtleiter gelangen und von einer mit dem Lichtleiter verbundenen Auswerteeinrichtung (zum Beispiel umfassend eine fotosensitive Einheit wie einen CCD- oder CMOS-Sensor) erfasst und ausgewertet werden. Wenn sich die Fokusposition auf einer Objektoberfläche befindet (d. h. die Objektoberfläche im Fokus der Sensoreinrichtung liegt), wird die hiervon rückreflektierte Strahlung in einem vergleichsweise großen Ausmaß zurück auf die Lochblende geworfen, sodass eine hohe Intensität und/oder Strahlungsleistung der rückreflektierten Strahlung erfassbar ist. Ist dies nicht der Fall, wird im allgemeinen ein geringerer Anteil der rückreflektierten Strahlung von der Objektoberfläche auf die Lochblende zurückgeworfen bzw. darauf abgebildet, sodass nur eine entsprechend geringere oder auch gar keine Intensität und/oder Strahlungsleistung der rückreflektierten Strahlung erfassbar ist.

Sofern nicht anders angegeben oder ersichtlich, kann im Rahmen der vorliegenden Offenbarung unter einer (rück)reflektierten Strahlung einer von der Sensoreinrichtung erfasste (rück)reflektierte Strahlung verstanden werden, d.h. nicht beliebig in die Umgebung reflektierte Strahlung.

Ein Beispiel für eine Sensoreinrichtung der vorstehend erläuterten Klasse sind konfokale optische Sensoren. Es existieren konfokale optische Sensoren, die lediglich eine begrenzte Anzahl von definierten Fokuspositionen und insbesondere lediglich eine Fokusposition aufweisen. Die Strahlung kann in diesem Fall monochrom sein und insbesondere als monochrome Laserstrahlung erzeugt werden.

Eine besondere Art von konfokalen optischen Sensoren sind chromatisch-konfokale Sensoren (Weißlichtsensoren), wie sie zum Beispiel in der DE 10 2015 217 637 A1 und der US 5 785 651 A beschrieben sind. Bei chromatisch-konfokalen Sensoren handelt es sich im Vergleich zu anderen Abstandssensoren (wie z. B. kapazitive Sensoren) um hochauflösende und genaue Abstandssensoren. Auf dem Markt werden z.B. Weißlichtsensoren mit einer maximalen Auflösung von einem Hundertstel Mikrometer und Messbereichen in der Größenordnung von mehreren Zehntel Millimetern bis mehreren zehn Millimetern angeboten. Ein Beispiel dafür ist der konfokale Weißlichtsensor mit der Typenbezeichnung "confocal IDT IFS 2405" der Micro-Epsilon Messtechnik GmbH und Co. KG, Ortenburg, Deutschland.

Allgemein wird bei einem Weißlichtsensor weißes Licht (d.h. elektromagnetische, nicht notwendigerweise sichtbare Strahlung mit Strahlungsanteilen mehrerer Wellenlängen) von einer Lichtquelle auf eine Sensoroptik in Form einer Fokussieroptik eingestrahlt. Die Sensoroptik bewirkt eine Dispersion der Strahlung, d.h. es findet eine chromatische Aberration statt. Als Resultat werden die Strahlungsanteile der verschiedenen Wellenlängen in unterschiedlichem Abstand zu der Sensoroptik und somit auf unterschiedliche Fokuspositionen fokussiert. Es existiert somit eine Mehrzahl von wellenlängenspezifischen Fokuspositionen, wobei für jede Wellenlänge eine eigene Fokusposition existiert (d. h jeder Fokusposition ist genau eine Wellenlänge zugeordnet und eine Wellenlänge ist lediglich einer einzigen Fokusposition zugeordnet). Befindet sich in einer der Fokuspositionen ein Objekt, das die Strahlung in Richtung des Sensors zurückreflektiert, wird von dem Sensor Strahlung derjenigen Wellenlänge mit maximaler Intensität und/oder Strahlungsleistung detektiert, die in bzw. ausgehend von dieser Fokusposition reflektiert wurde.

Weiter ist ein Weißlichtsensor (zum Beispiel eine Auswerteeinrichtung hiervon) typischerweise dazu eingerichtet, eine Intensitätsverteilung der rückreflektierten Strahlung über deren Wellenlängenspektrum zu erfassen bzw. aufzuzeichnen. Ist eine der Fokuspositionen unmittelbar auf dem Objekt angeordnet, wird innerhalb der Intensitätsverteilung eine hohe Intensität für Strahlung mit der zu dieser Fokusposition zugehörigen Wellenlänge erfasst. Insbesondere kann es sich hierbei um ein einziges absolutes Intensitätsmaximum innerhalb der erfassten Intensitätsverteilung handeln und es können keine weiteren lokalen Intensitätsmaxima vorhanden sein.

Es ist auch möglich, dass gleichzeitig Strahlung verschiedener Wellenlängen an ihren jeweiligen Fokuspositionen reflektiert wird (zum Beispiel beim Bestrahlen eines zumindest teilweise transparenten Objekts und Reflexionen an unterschiedlichen Materialgrenzflächen hiervon). Dann detektiert der Sensor jeweils bei diesen Wellenlängen ein (lokales) Intensitätsmaximum. Aus der Wellenlänge des einzigen Intensitätsmaximums oder aus den Wellenlängen der Intensitätsmaxima kann bei Kenntnis des Abstandes einer Fokusposition zum Sensor (z. B. zur Fokussieroptik) der Abstand zwischen Sensor und Objektoberfläche ermittelt werden. Diese Kenntnis ist jedoch zunächst nicht vorhanden und wird in der Regel durch eine Referenzmessung gewonnen, bei der der Abstand zwischen Sensor zum Reflexionsort auch auf andere Weise gemessen wird, z. B. durch ein Laserinterferometer.

Insbesondere kann zum Erhalten aussagekräftiger Messwerte eine sogenannte Linearisierung von Weißlichtsensoren stattfinden. Im Detail können durch Erfassen von Abstandswerten mittels der zu linearisierenden Sensoreinrichtung aber auch einer zusätzlichen Messeinrichtung (zum Beispiel einem Referenztaster mit bekannten Eigenschaften) Abstandswerte zu einem Referenzkörper bestimmt werden. Aus einem Vergleich dieser Abstandswert können Linearisierungsparameter bestimmt, mit denen aus Messsignalen des Weißlichtsensors bei unterschiedlich großem Objekt-Abstand Funktionswerte einer linearen mathematischen Funktion des Messwertes (also des Messergebnisses des Sensors) in Abhängigkeit des Objekt-Abstandes ermittelt werden können. Vereinfacht ausgedrückt ermöglichen es die Linearisierungsparameter, die Messsignale des Sensors (die insbesondere die Intensitätsverteilung des vom Sensor empfangenen reflektierten Lichts über das Wellenlängenspektrum der rückreflektierten (Mess-) Strahlung wiedergeben) so in Abstands-Messwerte des Objekt-Abstandes umzurechnen, dass z. B. bei doppeltem Objekt-Abstand auch der doppelte Messwert des Objekt-Abstandes erhalten wird.

Im Rahmen der Linearisierung können somit Wertepaare zwischen Sensormesssignalen und dabei tatsächlich vorliegenden Abstandswerten zu einem von der Sensoreinrichtung erfassten Objekt ermittelt werden. Mit der Linearisierung ist es jedoch nicht möglich, die tatsächlichen Koordinaten einer oder sämtlicher Fokusposition(en) in einem vorbestimmten Koordinatensystem zu ermitteln (beispielsweise in einem Koordinatensystem des Positioniersystems, d.h. in Gerätekoordinaten). Derartige Koordinaten können vorteilhaft sein, um die Sensoreinrichtung und insbesondere deren Fokusposition(en) präzise relativ zu einem Objekt anordnen zu können. Stattdessen wird für die Linearisierung bisher in der Regel vorausgesetzt, dass Eigenschaften der Sensoreinrichtung wie z. B. eine Orientierung im Sinne der Ausrichtung einer Sensorachse bekannt sind. Unter einer Ausrichtung der Sensorachse kann im Rahmen der vorliegenden Offenbarung allgemein eine Orientierung z. B. im Sinne einer Verdrehung oder Rotation in bzw. zu den Achsen eines Maschinenkoordinatensystems (oder auch Gerätekoordinatensystems) verstanden werden oder aber eines anderen Koordinatensystems (z. B. von einem Sensorträger), dessen Ausrichtung z. B. relativ zu dem Maschinenkoordinatensystem bekannt ist.

Informationen bezüglich derartiger Koordinaten werden typischerweise im Rahmen eines Kalibriervorganges in Form eines sogenannten Einmessvorgangs ermittelt. Hierbei kann, analog zu einem sogenannten Einmessen zweier verschiedener Sensoren in einer Multi-Sensor-Anordnung und/oder zweier verschiedener (insbesondere taktiler) Messtaster, ein Kalibrierobjekt (kalibriertes Einmessnormal) mit zwei verschiedenen Sensoreinrichtungen erfasst werden. Basierend auf hierbei erhaltenen etwaigen unterschiedlichen Messwerten kann dann eine Kalibrierung stattfinden. Beispielsweise kann es sich bei einem der Sensoren und/oder Messtaster um einen sogenannten Referenz-Sensor bzw. Referenztaster handeln, dessen Eigenschaften bekannt sind und/oder dessen Messwerte als zutreffende Referenz angenommen werden können. Basierend auf dem Unterschied zwischen den mit dem zu kalibrierenden Sensor und/oder Messtaster erfassten Werten und den Referenzwerten können Parameter ermittelt werden (zum Beispiel sogenannte Kalibrier- oder Korrekturparameter). Diese können auf zukünftig gewonnene Messwerte des zu kalibrierenden Sensors und/oder Messtasters angewendet werden, beispielsweise um diese zu korrigieren.

In bekannter Weise kann zum Beispiel ein Kalibrierobjekt in Form einer Kugel (Einmesskugel) zunächst mit einer Referenz-Sensoreinrichtung oder auch einem Referenztaster mit bekannten Eigenschaften vermessen werden. Beispielsweise kann eine taktile Sensoreinrichtung als Referenz verwendet werden, deren Taststiftausrichtung (in Gerätekoordinaten), Taststiftabmessungen und ein Durchmesser einer etwaigen am Taststift angebrachten Tastkugel bekannt sind. Diese taktile Sensoreinrichtung kann eine Oberfläche einer Einmesskugel an mehreren Abtastpunkten abtasten und darauf basierend die Koordinaten des Kugelmittelpunkts der Einmesskugel berechnen (insbesondere in Gerätekoordinaten). Anschließend kann mittels einer noch nicht kalibrierten optischen Sensoreinrichtung ebenfalls die Oberfläche der Einmesskugel erfasst und darauf basierend können ebenfalls die Koordinaten des Kugelmittelpunkts berechnet werden.

Die optische Sensoreinrichtung kann hierfür zum Beispiel derart eingesetzt werden, dass ein Zustand, bei dem eine aus einer etwaigen Mehrzahl von Fokuspositionen der Sensoreinrichtung auf der Kugeloberfläche liegt, als eine hohe Intensität der rückreflektierten Strahlung mit der entsprechenden (d.h. zu der Fokusposition zugehörigen) Wellenlänge erkannt wird. Anders ausgedrückt kann in diesem Zustand davon ausgegangen werden, dass aktuell ein Punkt der Kugeloberfläche im Fokus der Sensorrichtung liegt, sodass beispielsweise auf Basis eines mit der Sensoreinrichtung aktuell ermittelten Abstandswertes Koordinatenwerte für diesen Punkt ermittelt werden können. Die optische Sensorrichtung kann zum Beispiel gradlinig auf die Einmesskugel zu bewegt werden und dann, wenn eine maximale Intensität festgestellt wird (im Falle eines chromatische-konfokalen Sensors eine maximale Intensität für wenigstens eine aus der Mehrzahl an ausgesendeten Wellenlängen), kann auf das Erreichen eines Punktes auf der Kugeloberfläche geschlossen werden.

Typischerweise wird bei einem bereits linearisierten Sensor ein Abstandswert vorgeben und die Sensoreinrichtung wird z. B. im Rahmen einer abstandsabhängigen Positionsregelung der KMG-Achsen derart relativ zu der Einmesskugel positioniert, dass dieser Abstandswert gemessen wird. Ist dieser Zustand erreicht, können auf Basis des ermittelten Abstands Koordinaten für einen Oberflächenpunkt der Einmesskugel bestimmt werden. Wird eine Mehrzahl von Punkten auf der Kugeloberfläche auf diese Weise erfasst (z. B. mindestens drei), können hieraus Koordinaten für den Kugelmittelpunkt berechnet werden. Aus dem Unterschied der jeweils ermittelten Kugelmittelpunktskoordinaten (d. h. den mit dem Referenztaster und den mit der optischen Sensoreinrichtung ermittelten Koordinaten) können dann Kalibrierparameter für die optische Sensoreinrichtung bestimmt werden.

Es hat sich gezeigt, dass sich mit diesem Vorgehen aber nicht stets die gewünschte Genauigkeit erreichen lässt. Insbesondere kann es schwierig sein, die genauen Koordinaten eines optisch erfassten Antastpunkts auf der Kugeloberfläche in Richtungen senkrecht zu einer Kalibrierrichtung (d. h. senkrecht zu einer Richtung, entlang derer die Sensoreinrichtung z.B. auf das Kalibrierobjekt zu bewegt wird und/oder die einer zumindest vermuteten Ausrichtung der Sensorachse entspricht) zu bestimmen, da die Sensorachse gegenüber der Kalibrierrichtung verkippt sein kann (d.h. ein tatsächlich abgetasteter Punkt neben und somit radial beanstandet von der Kalibrierrichtung liegt).

Weiter kann mit dem bloßen optischen Antasten von Punkten auf einer Kugeloberfläche nicht immer die gewünschte Genauigkeit erzielt werden, da aufgrund der geringen Einfallswinkel (zur Sensorachse) der auf die gewölbte Kugeloberfläche gerichteten Strahlen gegebenenfalls nur ein geringer reflektierter Strahlungsanteil auf z. B. eine etwaige Lochblende der Sensoreinrichtung abgebildet werden kann. Trotz Anordnen einer Fokusposition unmittelbar auf der Kugeloberfläche kann somit nicht immer eine maximale Intensität der rückreflektierten Strahlung erfasst werden. Somit kann die Sensoreinrichtung gegebenenfalls nicht erkennen, dass sie sich bereits auf der Kugeloberfläche befindet und zum Beispiel im Rahmen des vorstehenden Kalibriervorgangs falsche Koordinaten und insbesondere falsche Mittelpunktskoordinaten berechnen. Als Resultat können unzutreffende Kalibrierparameter bestimmt und können von der Sensoreinrichtung ausgegebene und ggf. mit diesen Kalibrierparametern verrechnete Messwerte nicht die realen Verhältnisse wiedergeben. Insbesondere können bei dem Erfassen von Kugeloberflächenpunkten in der Regel nur kleine Kugelsegmente erfasst werden (d.h. die erfassbaren Oberflächenpunkte liegen nah beieinander). Hieraus ergibt sich eine signifikante mathematische Unsicherheit bei dem Verwenden der Oberflächenpunkte für eine Kugelberechnung bzw. eine Bestimmung von Kugelmittelpunktskoordinaten.

Aus der DE 10 2006 017 401 A1 ist ferner ein Verfahren zur optischen Bestimmung des Mittelpunkts einer transparenten Kugel bekannt, wobei eine Fokusposition in einem Kugelmittelpunkt positioniert wird und von einer Kugelinnenfläche reflektiertes Licht gemessen wird. Die eingestrahlte Strahlung soll dabei durch die transparente Kugel in deren Inneres gelangen und an einer Innenwand hiervon unter erneutem Durchlaufen des Kugelmittelpunkts rückreflektiert werden.

Das Dokument ZOU XICONG ET AL: "Non-contact on-machine measurement using a chromatic confocal probe for an ultra-precision turning machine", THE INTERNATIONAL JOURNAL OF ADVANCED MANUFACTURING TECHNOLOGY, SPRINGER, LONDON, Bd. 90, Nr. 5, 10. Oktober 2016 (2016-10-10), Seiten 2163-2172, XP036227824, ISSN: 0268-3768, DOI: 10.1007/S00170-016-9494-3 offenbart eine kugelbasierte Kalibrierung einer chromatischen, konfokalen Sensoreinrichtung.

Die US 7,436,520 B1 offenbart ein Verfahren zur Kalibrierung einer Interferometervorrichtung.

Eine Aufgabe der vorliegenden Erfindung ist es daher, die Genauigkeit des Kalibrierens von optischen Sensoreinrichtungen zur Objekterfassung zu verbessern.

Diese Aufgabe wird durch ein Verfahren und eine Anordnung gemäß den beigefügten unabhängigen Ansprüchen gelöst, die den Schutzbereich definieren. Vorteilhafte Weiterbildungen sind in den abhängigen Ansprüchen angegeben. Ferner versteht es sich, dass die in der einleitenden Beschreibung erwähnten Merkmale einzeln oder in beliebiger Kombination auch bei der vorliegend offenbarten Lösung vorgesehen sein können, sofern nicht anders angegeben oder ersichtlich.

Gemäß einem Grundgedanken der Erfindung wird im Rahmen des Kalibriervorgangs die wenigstens eine Fokusposition einer optischen Sensoreinrichtung nicht (oder zumindest nicht ausschließlich) auf eine Oberfläche eines Kalibrierobjekts (oder auch Einmessobjekt) gerichtet. Stattdessen wird diese Fokusposition in einem Abstand zu einem Kalibrierobjekt positioniert. Dies bedeutet, dass sich der Einfallswinkel der ausgesendeten Strahlung gegenüber der Oberfläche vergrößern kann, insbesondere im Vergleich zu dem Fall, dass die Fokusposition unmittelbar auf der Oberfläche selbst angeordnet wird. Wie nachstehend erläutert, kann der Abstand insbesondere derart gewählt sein, dass sich eine vorbestimmte und insbesondere maximal ausgeprägte (erfassbare) Rückreflexion erzielen lässt.

Weiter kann erfindungsgemäß vorgesehen sein, entgegen der bisher bekannten Lösungen die Sensoreinrichtung nicht nur lediglich in einer Kalibrierrichtung gradlinig auf das Kalibrierobjekt zu bewegen, sondern auch weitere Bewegungen zu ermöglichen. Insbesondere wurde erkannt, dass bei einer gegenüber der Kalibrierrichtung zusätzlichen Verlagerung der Fokusposition relativ zu dem Kalibrierobjekt (aber in einem Abstand hierzu) eine noch genauere Erfassung des Kalibrierobjekts möglich ist. Insbesondere kann hierdurch mit einer hohen Zuverlässigkeit sichergestellt werden, dass die Fokusposition auf einen gewünschten vorbestimmten Punkt in dem oder außerhalb des Kalibrierobjekt(s) gerichtet ist, wobei für diesen vorbestimmten Punkt vorzugsweise Koordinaten mittels einer Referenz-Sensoreinrichtung ermittelt wurden und/oder bekannt sind. Eine schlussendlich erfolgende Kalibrierung auf Basis eines Vergleichs von für diesen Punkt ermittelten Koordinaten kann daher besonders präzise ausfallen.

Ein weiterer Grundgedanke sowie Vorteil des erfindungsgemäßen Verfahrens besteht darin, dass die Fokusposition zum Beispiel lediglich auf einen einzelnen vorbestimmten Punkt in dem oder außerhalb des Kalibrierobjekt(s) und nicht auf eine Mehrzahl von Punkten auf der Kugeloberfläche gerichtet werden kann. Dies verkürzt die Kalibrierdauer und die Messunsicherheit, die mit dem Erfassen mehrerer Antastpunkte und darauf basierendem lediglich mittelbaren Berechnen von zum Beispiel Kugelmittelpunktskoordinaten einhergeht. Insbesondere kann das Verfahren deshalb eine höhere Genauigkeit erzielen, da durch ein gesamtes Oberflächensegment reflektierte Strahlung ausgewertet wird (d.h. die von der Oberfläche insgesamt reflektierte erfassbare Strahlung, wenn die Fokusposition in einem Abstand zur Oberfläche positioniert wird) und nicht lediglich von einzelnen Oberflächenpunkten. Abmessungen und insbesondere ein Radius des Kalibrierobjekts können bekannt sein oder ermittelt werden.

Im Detail wird ein Verfahren zum Erfassen eines Kalibrierobjekts mit einer optischen Sensoreinrichtung vorgeschlagen, wobei die Sensoreinrichtung dazu eingerichtet ist, elektromagnetische Strahlung mit wenigstens einer Wellenlänge auszusenden und diese Strahlung in einer Fokusposition entlang einer Sensorachse zu fokussieren (d. h. die Sensoreinrichtung weist wenigstens eine Fokusposition auf), wobei das Verfahren umfasst:
- Einstrahlen von elektromagnetischer Strahlung entlang der Sensorachse auf eine gewölbte Oberfläche eines (für die Strahlung erfindungsgemäß intransparenten) Kalibrierobjekts und Erfassen von Strahlung, die von dem Kalibrierobjekt reflektiert wird;
- Anordnen der Sensoreinrichtung und des Kalibrierobjekts relativ zueinander, so dass die Fokusposition in einem Abstand zu der gewölbten Oberfläche angeordnet ist und ein Zielzustand erreicht ist, in dem gemäß einer ersten erfindungsgemäßen Alternative eine erfasste reflektierte Strahlungsleistung der zu der Fokusposition zugehörigen Wellenlänge oder, gemäß zweiten erfindungsgemäßen Alternative, eine auf Basis der erfassbaren reflektierten Strahlung ermittelte Interferenzeigenschaft eine vorbestimmte Bedingung erfüllt (z. B. einen Schwellenwert erreicht oder überschreitet).

Bei dem Kalibrierobjekt kann es sich um ein sogenanntes Kalibriernormal handeln. Die gewölbte Oberfläche kann ein Segment oder Bereich der Gesamtoberfläche des Kalibrierobjekts bilden. Allgemein kann die gewölbte Oberfläche konvex gewölbt und vorzugsweise in Richtung der Sensoreinrichtung konvex gewölbt sein oder aber konkav gewölbt und insbesondere in einer von der Sensoreinrichtung abgewandten Richtung konkav gewölbt sein. Beispielsweise kann die gewölbte Fläche des Kalibrierobjekts eine äußere Kugeloberfläche oder ein (äußeres) Oberflächensegment eines kugelförmigen Kalibrierobjekts oder ein (äußeres) Oberflächensegment von z.B. einer halbkugelförmigen Ausnehmung sein. Das Kalibrierobjekt kann ortsfest (d.h. stationär) relativ zu der Sensoreinrichtung angeordnet oder aber mittels eines Positioniersystems (z.B. einem Messtisch) bewegbar sein.

Die erfindungsgemäß erfasste Reflexion kann überwiegend oder ausschließlich von einer äußeren gewölbten Oberfläche (Außenfläche) des Kalibrierobjekts ausgehen bzw. an dieser erfolgen. Reflexionen aus Innenflächen, bei denen die Strahlung erst in das Kalibrierobjekt durch wenigstens eine Materialgrenze eindringen und/oder wieder austreten muss, können nicht vorgesehen und allgemein nicht bevorzugt sein, da diese z.B. nachstehend erläuterten optischen Brechungseffekten unterliegen können. Auch könnte es dann zu unerwünschten Interferenzeffekten kommen, wenn an unterschiedlichen Flächen reflektierte Strahlungsanteile einander zumindest abschnittsweise entlang eines gemeinsamen Strahlungswegs überlagern (zum Beispiel entlang eines Strahlungswegs zwischen dem Kalibrierungsobjekt und der Sensoreinrichtung). Die Erfindung kann als vorsehen, dass die eingestrahlte Strahlung (z.B. nach Verlassen der Sensoreinrichtung) vor und/oder nach einer Reflexion an dem Kalibrierobjekt keine Materialgrenze durchläuft.

Erfindungsgemäß ist vorgesehen, ein für die eingestrahlte Strahlung größtenteils oder vollständig intransparentes Kalibrierobjekt-Material zu verwenden. Hierdurch kann die Reflektion der Strahlung an der Außenfläche erreicht werden und bevorzugt ausschließlich an der Außenfläche, ohne dass die eingestrahlte Strahlung in das Kalibrierobjekt eindringt oder von anderen Bereichen des Kalibrierobjekts reflektiert wird, als von der Außenfläche (zum Beispiel nicht von einer Innenfläche des Kalibrierobjekts nach vorstehend diskutiertem Durchlaufen von Materialgrenzen reflektiert wird).

Hierdurch können optische Brechungseffekte, die bei einer zumindest Teiltransparenz vorliegen würden, vermieden werden. Letzteres ist besonderes deshalb relevant, da die optischen Brechungseigenschaften von Materialien und insbesondere etwaigen (teil)transparenten Materialien temperaturabhängig sein können, was mit zusätzlichen Genauigkeitseinbussen einhergehen würde. Zudem können diese Brechungseigenschaften nicht homogen über das Material hinweg verteilt sein, zum Beispiel aufgrund von mechanischen Spannungen, die aus dem Herstellungsprozess resultieren.

Weiter besitzt das Verwenden intransparenter Materialien den Vorteil, dass Halterungen des Kalibrierobjekts (zum Beispiel stiftförmige Halterungen bekannter Einmesskugeln) optisch durch das Kalibrierobjekt verdeckt werden können. Der Einfluss derartiger Halterungen insbesondere auf den sensorisch erfassten Reflexionsvorgang kann somit unterdrückt werden. Es kann ferner ein größerer Freiheitsgrad für das Anordnen der Halterungen existieren, als wenn ein für die Strahlung zumindest teiltransparentes Material verwendet werden würde. In letzterem Fall könnte Strahlung durch das Kalibrierobjekt hindurch auf die Halterung treffen, von der dann das Messergebnis verfälschende Reflektionen ausgehen. Die Halterung müsste also stets geeignet positioniert werden, um Wechselwirkungen mit der das Kalibrierobjekt durchdringenden Strahlung zu vermeiden.

Bevorzugt wird die vorteilhafte Intransparenz des Kalibrierobjekts durch Verwenden gängiger Einmesskugeln aus Keramikmaterial erreicht, was zudem kostensparend ist, da ohnehin verfügbare keramische Einmesskugeln verwendet werden können. Diese können dann auch für ein taktiles Messen mit z.B. einem Referenztaster verwendet werden.

Erfindungsgemäß kann allgemein vorgesehen sein, dieselbe gewölbte Oberfläche in der hierin geschilderten Weise zu bestrahlen, aber auch taktil zu vermessen (zum Beispiel mit einem Referenztaster und/oder zwecks Kalibrierung). Auch in diesem Fall ist eine Oberfläche aus nicht-transparentem Material und insbesondere aus Materialien gängiger Einmesskugeln (bspw. Keramik) vorteilhaft, da diese typischerweise sowohl gewünschte Reflexions- und Intransparenzeigenschaften besitzen als auch eine ausreichende Oberflächenhärte für wiederholte taktile Antastungen. Zu weiches und/oder transparentes Material könnte bei taktilen Antasungen verkratzen, was sich wiederum negativ auf die Reflexionseigenschaften auswirkt.

Weiter wird allgemein bevorzugt, dass ein Krümmungsradius der gewölbten Oberfläche kleiner als ein Abstand der Fokusposition zur Sensoreinrichtung und/oder Sensoroptik ist. Im Fall einer Mehrzahl von Fokuspositionen ist der Krümmungsradius vorzugsweise kleiner als der geringste Abstand einer der Fokuspositionen zur Sensoroptik und/oder Sensoreinrichtung oder aber kleiner als der Abstand von zumindest einer Mehrzahl der Fokuspositionen zur Sensoroptik. Durch eine entsprechende Wahl des Krümmungsradius kann erreicht werden, dass ein Anordnen der Fokusposition innerhalb des Kalibrierobjekts und insbesondere im Bereich eines etwaigen Wölbungsmittelpunkts der gewölbten Oberfläche tatsächlich in der Weise möglich ist, dass aussagekräftige Messwerte erzeugt. Beispielsweise kann hierdurch sichergestellt werden, dass die Sensoroptik nach wie vor in einem Abstand zu der gewölbten Oberfläche positioniert werden und somit die Strahlung in der gewünschten Weise führen kann, gleichzeitig aber die Fokusposition in einem gewünschten Ausmaß (bzw. in einer gewünschten Tiefe) innerhalb des Kalibrierobjekts anordenbar ist (zum Beispiel auf dem Wölbungsmittelpunkt).

Die optische Sensoreinrichtung kann dazu eingerichtet sein, mit einem Koordinatenmessgerät oder einem anderweitigen Positioniersystem gekoppelt zu werden, d.h. insbesondere kann erfindungsgemäße Bewegen der Sensoreinrichtung relativ zu dem Kalibrierobjekt bewirkt werden, indem die an einem Koordinatenmessgerät oder Roboter angekoppelte und/oder befestigte Sensoreinrichtung von einer Bewegungseinrichtung des Koordinatenmessgeräts oder des Roboters bewegt wird. Die Bewegungseinrichtung kann insbesondere zumindest einen Antrieb wie zum Beispiel einen Elektromotor aufweisen.

Insbesondere kann nach dem Erfassen des Kalibrierobjekts mit der optischen Sensoreinrichtung eine Vermessung eines Messobjekts, das nicht das Kalibrierobjekt ist, mit der an dem Koordinatenmessgerät oder dem Roboter angekoppelten und/oder befestigten Sensoreinrichtung durchgeführt werden, wobei Ergebnisse der Erfassung des Kalibrierobjekts mit der optischen Sensoreinrichtung berücksichtigt werden, insbesondere zumindest eines der nachstehend beschriebenen Ergebnisse. Insbesondere wird die Sensoreinrichtung zwischen dem Erfassen des Kalibrierobjekts und dem Erfassen des Messobjekts nicht von dem Koordinatenmessgerät oder dem Roboter abgekoppelt oder entfernt. Die Ergebnisse der Erfassung, insbesondere Kalibrierinformation, sind daher für den momentanen Zustand der Kopplung bzw. Befestigung gültig.

Zum Umfang der Erfindung gehört daher auch ein Koordinatenmessgerät oder ein Roboter, an dem die optische Sensoreinrichtung angeordnet ist, insbesondere angekoppelt und/oder befestigt ist, wobei das Koordinatenmessgerät oder der Roboter ausgestaltet ist, das Verfahren in einer in dieser Beschreibung beschriebenen Ausgestaltungen auszuführen. Insbesondere weist das Koordinatenmessgerät oder der Roboter daher die im Folgenden beschriebene Auswerteeinrichtung auf. Die Auswerteeinrichtung oder eine andere Recheneinrichtung (zum Beispiel ein handelsüblicher Computer mit Software) kann insbesondere ausgestaltet sein, Kalibrierinformation aus dem Erfassen des Kalibrierobjekts mit der optischen Sensoreinrichtung zu verarbeiten.

Insbesondere können durch das Erfassen des Kalibrierobjekts mit der optischen Sensoreinrichtung Koordinaten des Kalibrierobjekts ermittelt werden und können diese Koordinaten als Kalibrierinformation bei der Vermessung des Messobjekts verwendet werden.

Im Fall eines zumindest teilweise kugelförmigen Kalibrierobjekts, können als Kalibrierinformation die Kugelmittelpunktkoordinaten ermittelt werden. Die Kugelmittelpunktkoordinaten können dann in derselben Weise wie aus dem Stand der Technik bekannt verwendet werden. Insbesondere können aus dem Unterschied der jeweils ermittelten Kugelmittelpunktkoordinaten (d. h. der mit einem Referenztaster und der mit der optischen Sensoreinrichtung ermittelten Koordinaten) Kalibrierparameter für die optische Sensoreinrichtung bestimmt werden.

Die optische Sensoreinrichtung kann eine Sensoroptik (Fokussieroptik) umfassen, mittels der elektromagnetische Strahlung in die Umgebung einstrahlbar und von der Umgebung reflektierte Strahlung erfassbar ist. Die optische Sensoreinrichtung kann auch einen Lichtleiter oder Lichtleiterabschnitt umfassen, in der von einer Strahlungserzeugungseinrichtung (zum Beispiel eine Lichtquelle bzw. Leuchte eines konfokalen Sensors) erzeugte und/oder aus der Umgebung rückreflektierte elektromagnetische Strahlung geführt wird. Insbesondere kann aus dem Lichtleiter elektromagnetische Strahlung auf die Fokussieroptik und von dort auf das Kalibrierobjekt gerichtet werden.

Ferner kann die rückreflektierte Strahlung mittels der Sensoroptik wieder in den Lichtleiter und von dort zu einer Auswerteeinrichtung (zum Beispiel eine Steuerung des Koordinatenmessgeräts oder des Roboters) geführt werden. Die Strahlungserzeugungseinrichtung, Auswerteeinrichtung und zumindest derjenige Abschnitt des Lichtleiters, der nicht mit der optischen Sensoreinrichtung unmittelbar gekoppelt und/oder darin aufgenommen ist, können separat von der optischen Sensoreinrichtung (oder zumindest einem bewegbareren Sensorkopf hiervon) bereitgestellt werden. Beispielsweise können diese Einheiten stationär und z.B. an einer Basis des Koordinatenmessgeräts angeordnet sein, wohingegen die optische Sensoreinrichtung mittels der Achsen des Koordinatenmessgeräts im Raum bewegbar ist. Insbesondere in diesem Fall kann die Sensoreinrichtung als ein Sensorkopf ausgebildet sein bzw. bezeichnet werden. Prinzipiell kann aber auch vorgesehen sein, dass zumindest eine von der Strahlungserzeugungseinrichtung und Auswerteeinheit in die optische Sensoreinrichtung integriert ist bzw. einen Bestandteil hiervon bildet.

Die optische Sensoreinrichtung ist gemäß der ersten erfindungsgemäßen Alternative eine konfokale Sensoreinrichtung oder eine chromatisch-konfokale Sensoreinrichtung (d.h. ein Weißlichtsensor) oder, gemäß der zweiten erfindungsgemäßen Alternative, eine interferometrische Sensoreinrichtung. Ist eine konfokale Sensoreinrichtung vorgesehen, können sich die Fokusposition und eine Wellenlänge auf die einzige Fokusposition bzw. vorzugsweise einzige ausgesendete (bzw. einzige auswertbare ausgesendete) Wellenlänge dieser Sensoreinrichtung beziehen. Ist eine chromatische-konfokale Sensoreinrichtung vorgesehen, können sich vorstehende oder nachfolgende Bezugnahmen auf eine Fokusposition und/oder Wellenlänge auf zumindest eine aus der Mehrzahl an Fokuspositionen und/oder dazugehörigen Wellenlängen dieser Sensoreinrichtung beziehen. Dabei kann es sich insbesondere um eine vorbestimmte Fokusposition samt dazugehöriger Wellenlänge handeln. Insbesondere kann bei einer chromatisch-konfokalen davon ausgegangen werden, dass ein eindeutiger Zusammenhang zwischen Fokuspositionen und Wellenlängen besteht und vorzugsweise auch bekannt ist.

Wie einleitend geschildert, kann es sich bei der Sensorachse um eine konzentrisch zu einer Lochblende (bzw. einer Austrittsöffnung eines Lichtleiters) verlaufende Achse handeln, entlang derer die Strahlung innerhalb der Sensoroptik geführt und auf der die Fokusposition liegt. Allgemein handelt es sich bei der Sensorachse um eine virtuelle Achse, die gemeinsam mit der optischen Sensoreinrichtung und insbesondere der Austrittsöffnung des Lichtleiters im Raum bewegbar ist. Über die Wahl der optischen Elemente der Sensoroptik und insbesondere deren Abmessungen, optischen Eigenschaften und/oder Anordnung kann die Lage der Fokusposition als ein virtueller Punkt auf der Sensorachse definiert werden.

Das Erfassen der rückreflektierten Strahlung kann insbesondere das Abbilden der rückreflektierten Strahlung auf die Lochblende (z.B. in Form der Austrittsöffnung eines Lichtleiters) mittels der Sensoroptik umfassend. Von dort aus kann die rückreflektierte Strahlung (bzw. zumindest der auf die Lochblende abgebildete Strahlungsanteil) zu einer Auswerteeinrichtung geführt werden. Diese kann z.B. die Strahlungsleistung und insbesondere eine (zum Beispiel während einer Belichtungszeitdauer erfasste) Intensität (d.h. Strahlungsflussdichte) der rückreflektierten Strahlung bestimmen. Im Falle eines chromatisch-konfokalen Sensors kann auch die Intensitätsverteilung über das gesamte ausgesendete Wellenlängenspektrum beispielsweise während einer Belichtungszeitdauer erfasst werden. In an sich bekannter Weise kann die Auswerteeinrichtung zum Erfassen der Strahlungsleistung, Intensität und/oder Intensitätsverteilung eine fotosensitive Einheit wie z.B. einen CCD- oder CMOS-Sensor umfassen.

Die Messsignale und/oder Messwerte der Sensoreinrichtung können folglich die Strahlungsleistung, die Intensität und/oder eine Intensitätsverteilung betreffen oder angeben. Anders ausgedrückt kann die Sensoreinrichtung somit mehrere verschiedene Messwerte betreffend verschiedene Eigenschaften der rückreflektierten Strahlung erfassen oder auch lediglich einen Messwert. Die Auswerteeinrichtung kann aber auch dazu eingerichtet sein, basierend auf derartigen Messsignalen bzw. Messwerten weitere Messinformationen und insbesondere Abstandswerte zu ermitteln. Hierfür kann sie auf vorstehend geschilderte Linearisierungsparameter und/oder Kalibrierparameter zurückgreifen. Die Auswerteeinrichtung kann als eine Recheneinheit realisiert sein und zum Beispiel einen Prozessor umfassen, auf dem Programmanweisungen zum Auswerten der Messsignale oder Messwerte ausführbar sind.

Alternativ oder zusätzlich können die Messsignale oder Messwerte auch eine Zeitdauer betreffen, die erforderlich ist, um eine vorbestimmte und über die Zeit aufintegrierte erfasste Strahlungsintensität und insbesondere eine aufintegrierte Mindestintensität zu erfassen.

Allgemein kann das Anordnen von Sensoreinrichtung und Kalibrierobjekt ein zunächst ausgeführtes grobes Anordnen umfassen (d. h. eine Grobanordnung oder Grobpositionierung). Dabei kann zum Beispiel auf nachstehend erläuterte Ergebnisse einer Vorkalibrierung zurückgegriffen werden. Hierdurch kann versucht werden, eine Relativanordnung zu erreichen, welche den Zielzustand bereits weitest möglich annähert. Insbesondere kann die Fokusposition hierbei bereits in einem Abstand zur Objektoberfläche angeordnet werden (z. B. im Objektvolumen) und/oder allgemein derart, dass ein Auftreffen auf die Oberfläche in Folge weitere erwarteter Relativbewegungen mit einer hohen Wahrscheinlichkeit ausgeschlossen ist. Anschließend kann eine Feinanordnung oder auch Feinpositionierung erfolgen, bei der zusätzliche Relativbewegungen der Sensoreinrichtung und des Kalibrierobjekts durchgeführt werden können, bis der Zielzustand erreicht ist.

Das Anordnen der Sensoreinrichtung und des Kalibrierobjekts kann ein geradliniges Relativbewegen von Sensoreinrichtung und Kalibrierobjekt umfassen. Insbesondere kann vorgesehen sein, die Sensoreinrichtung entlang einer geradlinigen Bewegungsrichtung (Kalibrierrichtung) relativ zu und/oder auf das Kalibrierobjekt zuzubewegen. Gleichzeitig hierzu werden vorzugsweise die erfassten Messsignale überwacht, welche insbesondere die Intensität (und/oder Intensitätsverteilung) der rückreflektierten Strahlung angeben können.

Gemäß einer Variante von Verfahren und Anordnung wird das Erreichen eines gewünschten Abstandes der Fokusposition zu der gewölbten Oberfläche und insbesondere das Erreichen einer (virtuellen) Ebene, bei der dieser Abstand vorliegt, anhand der Intensität oder Strahlungsleistung der rückreflektierten Strahlung erkannt. Dies kann z.B. dann relevant sein, wenn vorab (d. h. im Rahmen einer Vorkalibrierung vor dem Durchführen des eigentlichen Verfahrens) die Ausrichtung der Sensorachse ermittelt und die Kalibrierrichtung vorzugsweise entlang der Sensorachse gewählt wird. Die Ausrichtung kann z. B. anhand der Konstruktion der Sensoreinrichtung und/oder deren Anbringung zum Beispiel an einem Koordinatenmessgerät geschätzt werden. Alternativ kann eine solche Ausrichtung aus Einzelmessungen an zum Beispiel einer Kalibrierkugel abgeschätzt werden. Beispielsweise können Abstandswerte vorgegeben werden, auf die eingeregelt werden soll (d. h. die Sensoreinrichtung soll in diesen Abständen relativ zu zum Beispiel einer Kalibrierkugel positioniert werden). Aus den bei Erreichen der Abstandswerte eingenommenen Positionen kann dann eine Ausrichtung der Sensorachse abgeschätzt werden (d. h. die jeweiligen Positionen können als auf der Sensorachse liegend betrachtet werden, sodass die (vermutete) Sensorachse hieraus berechnet werden kann).

Dabei ist zu berücksichtigen, dass Intensitätsmaxima in der Regel dann feststellbar sind, wenn eine Fokusposition auf der Oberfläche liegt, aber ebenso, wenn diese in einem vorbestimmten Abstand hierzu positioniert ist (z. B. in einem Wölbungsmittelpunkt wie nachfolgend erläutert). Letzteres stellt einen für die hierin vorgestellte Lösung bevorzugten Zustand dar. Um sicherzugehen, dass festgestellte Strahlungsleistungen tatsächlichen den letzteren Zustand und keine Positionierung auf Oberfläche betreffen, kann eine nachstehend erläuterte Grobpositionierung erfolgen, die ein Erreichen der Oberfläche durch die Fokusposition mit einer hohen Wahrscheinlichkeit ausschließt. Zusätzlich oder alternativ kann eine manuelle (d.h. durch einen Bediener erfolgende) Plausibilitätsüberprüfung stattfinden und/oder können (jeweils manuell oder automatisch) z.B. ein Abstandssignal, bekannte Informationen zur Objektlage und/oder zu den Objektdimensionen, eine KMG-Position oder Informationen zu einer ungefähr bekannten Sensorgeometrie für eine Plausibilitätsüberprüfung herangezogen werden, um zu differenzieren, ob die Fokusposition den bevorzugten Abstand oder die Objektoberfläche erreicht hat.

Gemäß einer Variante von Verfahren und Anordnung ist die Lage der Fokusposition (z.B. als Abstand der Fokusposition zur Sensoreinrichtung) insbesondere in Gerätekoordinaten näherungsweise (d.h. zumindest grob oder ungefähr) bekannt und z. B. vorab im Rahmen einer Vorkalibrierung ermittelt worden. Weiter kann auch die Lage eines vorbestimmten Punktes oder einer vorbestimmten Ebene innerhalb oder außerhalb des Kalibrierobjekts zumindest näherungsweise bekannt sein, wobei der Punkt oder die Ebene beispielsweise in einem definierten Zusammenhang mit der gewölbten Oberfläche stehen können. Zum Beispiel kann es sich um einen Wölbungsmittelpunkt oder eine diesen Punkt umfassende Ebene handeln oder allgemein um eine Ebene oder einen Punkt, welche die Fokusposition zum Erzielen des Zielzustandes zumindest näherungsweise erreichen muss. Derartige Informationen können vorzugsweise erneut in Gerätekoordinaten vorliegen.

Die Lage der vorbestimmten Ebene oder des vorbestimmten Punktes kann z.B. durch taktiles Antasten des Kalibrierobjekts (oder allgemeines Erfassen des Kalibrierobjekts mittels einer Referenz-Sensoreinrichtung) ermittelt werden, woraufhin auf Basis der dabei erfassten Messwerte eine Lage der Ebene und/oder eines darin befindlichen vorbestimmten Punktes berechnet werden kann. Die Lage der Fokusposition kann zum Beispiel im Rahmen der geschilderten Vorkalibrierung durch optisches Vermessen einer Einmesskugel und vergleichen der hierbei gewonnenen Messwerte zu Messwerten umfassen, die bei einem Erfassen derselben Kugel mittels eines Referenztaster gewonnen wurden.

Folglich kann die Fokusposition über das Vorgeben von Bewegungsanweisungen an ein Positioniersystem (und insbesondere an die Achsen eines Koordinatenmessgeräts) zumindest näherungsweise in der vorbestimmten Ebene oder auf dem vorbestimmten Punkt positioniert werden. Auf diese aber auch auf andere Weise (zum Beispiel lediglich basierend auf Schätzungen oder Erfahrungswerten) kann eine erste Grobanordnung von Sensoreinrichtung und Kalibrierobjekt vorgenommen werden, die vorzugsweise durch ein weiteres Relativbewegen von Sensoreinrichtung und Kalibrierobjekt verfeinert wird, bis der Zielzustand erreicht ist.

Genauer gesagt können aus den Koordinaten der Fokusposition und der vorbestimmten Ebene oder des Punktes die erforderlichen Bewegungsanweisungen abgeleitet werden, um die Fokusposition in der Ebene und insbesondere in einem vorbestimmten Punkt darin positionieren zu können. Ob oder inwieweit diese Positionierung tatsächlich gelungen ist und ob dadurch der Zielzustand erreicht wurde, kann beispielsweise über das Verändern der Relativanordnung von Sensoreinrichtung und Kalibrierobjekt und insbesondere Bewegen der Fokusposition in der Ebene geprüft und/oder korrigiert werden.

Alternativ kann eine Vorkalibrierung erfolgen, bei der die Lage der Sensorachse (zum Beispiel in Gerätekoordinaten) zumindest näherungsweise (d. h. grob oder ungefähr) ermittelt wird. Die Sensoreinrichtung kann derart ausgerichtet werden, dass die (ermittelte) Sensorachse einen z.B. mit einem Referenztaster bestimmten Wölbungsmittelpunkt oder zumindest eine Ebene enthaltend diesen Punkt schneidet oder aber die Sensorachse kann derart bestimmt werden, dass sie diesen Mittelpunkt schneidet. Anschließend kann die Sensoreinrichtung entlang der Sensorachse bewegt und können Messsignale parallel hierzu überwacht werden, bis diese das zumindest näherungsweise Erreichen von z.B. dem Wölbungsmittelpunkt oder der Ebene und/oder des Zielzustands anzeigen. Die Kalibrierrichtung kann somit entlang der ermittelten Lage der Sensorachse ausgerichtet sein. Auch auf diese Weise kann eine Grobanordnung vorgenommen werden und können, wie nachstehend geschildert, anschließend zusätzliche Relativbewegungen von Sensoreinrichtung und Kalibrierobjekt ausgeführt werden, um den Zielzustand zu erreichen.

Die optionalen Vorkalibrierungen, welche allgemein als gesonderte Verfahrensschritte des erfindungsgemäßen Verfahrens vorgesehen sein können und/oder von der erfindungsgemäßen Anordnung ausgeführt werden können, bieten den Vorteil, dass ein zumindest grobes erstes Anordnen von Fokusposition und Kalibrierobjekt nahe des Zielzustandes vergleichsweise schnell und präzise erfolgen kann. Insbesondere muss nicht vollständig iterativ oder manuell vorgegangen werden, um die Fokusposition in einer geeigneten Weise relativ zu dem Kalibrierobjekt anzuordnen und/oder den Zielzustand zumindest grob annähern zu können. Eine solche iterative oder manuelle erste Anordnung wäre prinzipiell aber ebenso möglich, sodass das Durchführen einer Vorkalibrierung eine rein optionale Maßnahme darstellt.

Sollen im Anschluss an ein erstes (grobes) Anordnen weitere Relativbewegungen von Sensoreinrichtung und Kalibrierobjekt erfolgen (zum Beispiel für eine Feinpositionierung), können diese Bewegungen in von einer etwaigen Kalibrierrichtung verschiedenen Richtungen gewählt sein. Insbesondere können lediglich Relativbewegungen von Sensoreinrichtung und Kalibrierobjekt in zu der Kalibrierrichtung (und/oder der Sensorachse) orthogonalen Richtungen erfolgen. Erneut können parallel hierzu die Messsignale der Sensoreinrichtung überwacht werden und insbesondere deren Änderungen. Zusätzlich oder alternativ können diese Relativbewegungen entlang wenigstens zwei Bewegungsrichtungen in einer gemeinsamen Ebene erfolgen, wobei die Bewegungsrichtungen in einem Winkel zueinander und vorzugsweise orthogonal zueinander verlaufen.

Der Zielzustand, dessen Erreichen bei dieser Veränderung anhand der Messsignale überprüft und/oder fortlaufend überwacht wird, kann einen Zustand sein, bei dem ein vorbestimmtes und insbesondere maximal ausgeprägtes Reflexionsverhalten der Strahlung durch das Kalibrierobjekt auftritt (zumindest bezogen auf die wenigstens eine Wellenlänge). Dies kann anhand der Messsignale entsprechend erkennbar sein. Hierbei kann es sich insbesondere um ein maximales Ausmaß und insbesondere eine maximale erfassbare reflektierte Strahlungsleistung von zumindest einer Wellenlänge der rückreflektierten Strahlung handeln, wobei diese Wellenlänge zu der Fokusposition gehört (d. h. Strahlung mit dieser Wellenlänge in der Fokusposition fokussiert wird). Als Indiz für das Vorliegen einer entsprechenden Strahlungsleistung können eine Intensität, eine Zeitdauer zum Erfassen einer aufintegrierten Intensität und/oder eine Intensitätsverteilung betrachtet werden, wie nachstehend noch näher erläutert.

Allgemein kann als Bedingung der Strahlungsleistung das Erreichen eines Maximalwerts definiert sein, wobei es sich auch um einen lediglich lokalen Maximalwert in einer erfassten Intensitätsverteilung der reflektierten Strahlung handeln kann. Wie nachstehend erläutert, kann auch eine für das Erreichen eines vorbestimmten aufintegrierten Intensitätswerts vorzugsweise automatisch geregelte Belichtungszeit betrachtet werden, wobei die Bedingung das Erreichen eines Minimalwerts oder unteren Schwellenwerts dieser Belichtungszeit ist. Gemäß der zweiten erfindungsgemäßen Alternative wird als Interferenzeigenschaft ein nachstehend erläuterter Kontrast ermittelt, der zum Erfüllen der Bedingung maximal werden muss.

Eine Weiterbildung von Verfahren und Anordnung sieht vor, dass die Sensoreinrichtung auf Basis von wenigstens einem Messwert kalibriert wird, der ermittelt wird, wenn der Zielzustand erreicht ist. Beispielsweise kann der Messwert ein Abstandwert von der Sensoreinrichtung zu der gewölbten Oberfläche und/oder zu einer vorbestimmte Ebene innerhalb oder außerhalb des Kalibrierobjekts (und/oder eines darin befindlichen vorbestimmten Punktes) sein oder auf diesem Abstandswert basieren. Bei Erreichen des Zielzustands kann zum Beispiel der aktuelle von der (vorzugsweise linearisierten) Sensoreinrichtung ermittelte Abstandswert bestimmt und zu einer bekannten Dimension (z.B. einem Radius) des Kalibrierobjekts addiert werden. Hieraus kann ein Abstand eines Sensorkoordinatensystems und/oder einer Sensorschnittstelle des Positioniersystems zu einem vorbestimmten Punkt des Kalibrierobjekts bestimmt werden. Insbesondere können darauf basierend Koordinaten eines Wölbungsmittelpunkts bestimmt werden, z.B. in Gerätekoordinaten. Der Messwert kann folglich allgemein Koordinaten bezüglich des Kalibrierobjekts angeben z.B. von dessen gewölbter Oberfläche, von der vorbestimmten Ebene und/oder eines darin befindlichen vorbestimmten Punktes (oder allgemein von einem Wölbungsmittelpunkt).

Der Messwert kann dazu verwendet werden, um einen Unterschied zu beispielsweise mittels eines Referenztasters ermittelten Koordinaten für das Kalibrierobjekt zu bestimmen (insbesondere von einem Wölbungsmittelpunkt). Dieser Unterschied kann in an sich bekannter Weise dazu verwendet werden, Kalibrierparameter zu ermitteln. Genauer gesagt kann das Kalibrieren der Sensoreinrichtung umfassen, dass Kalibrierparameter ermittelt werden, mit denen zukünftig von der Sensoreinrichtung gewonnene Messinformationen (bzw. Messwerte) verrechnet und/oder transformiert werden können. Dies kann analog zu den einleitend diskutierten bekannten Ansätzen erfolgen, wonach die Kalibrierparameter anhand eines Unterschiedes zu Referenz-Messsignalen und/oder Referenz-Messinformationen ermittelt werden, beispielsweise wenn dasselbe Kalibrierobjekt (und insbesondere dieselbe Ebene und/oder derselbe darin angeordnete vorbestimmte Punkt bzw. Wölbungsmittelpunkt) mit einer Referenz-Sensoreinrichtung vermessen wird.

Allgemein ausgedrückt können somit als der wenigstens eine Messwert oder auf Basis des wenigstens einen Messwerts Informationen insbesondere in Form von Abstands- oder Koordinatenwerten ermittelt werden, welche einer Kalibrierung der Sensoreinrichtung zugrunde gelegt werden können.

Gemäß einer weiteren Ausführungsform von Verfahren und Anordnung ist der Zielzustand dann erreicht, wenn die Fokusposition in einem Wölbungsmittelpunkt der gewölbten Oberfläche positioniert ist (oder, mit anderen Worten, auf dem Wölbungsmittelpunkt liegt). Die gewölbte Oberfläche kann zum Beispiel durch wenigstens ein Segment einer zylindrischen Mantelfläche oder Kugelmantelfläche des Kalibrierobjekts gebildet werden. Im Fall eines kugelförmigen Kalibrierobjekts würde der Wölbungsmittelpunkt einem Kugelmittelpunkt entsprechen. Im Falle eines zylindrischen Kalibrierobjekts (vorzugsweise mit einer kreisförmigen Grundfläche) kann der Wölbungsmittelpunkt auf einer Zylinderachse liegen (insbesondere einer Zylinderlängsachse). Auf diese Weise können Richtungsabhängigkeiten der erfassten Messinformationen reduziert werden oder auch gänzlich entfallen. Weiter kann dann, wenn die wenigstens eine Fokusposition in dem Wölbungsmittelpunkt positioniert wird, ein bevorzugtes und leicht zu erfassendes Reflexionsverhalten (insbesondere eine maximale erfassbare Strahlungsleistung der rückreflektierten Strahlung) zuverlässig erreicht werden. Zudem können für den Wölbungsmittelpunkt auf präzise und einfache Weise auch mit einem Referenztaster oder einer Referenzsensoreinrichtung Messwerte (zum Beispiel Koordinaten) bestimmt werden, die dann mit wenigstens einem von der Sensoreinrichtung ermittelten Messwert zwecks Kalibrierung verglichen werden können.

Die vorbestimmte Bedingung kann insbesondere im Zusammenhang mit dem Wölbungsmittelpunkt dann erfüllt sein, wenn ein Maximum der reflektierten Strahlungsleistung erreicht ist. Dabei kann es sich bezüglich des Abstandes der Sensoreinrichtung zu der gewölbten Oberfläche (oder als eine Funktion dieses Abstandes betrachtet) um ein lokales Maximum handeln. Beispielsweise wäre es auch möglich, eine maximale Strahlungsleistung zu erreichen, wenn die Fokusposition auf der gewölbten Oberfläche aber nicht im Mittelpunkt liegt. Anders ausgedrückt können je nach Kalibrierobjekt mehrere Zustände erreichbar sein, bei denen die reflektierte Strahlungsleistung einen Maximalwert annimmt. Das Positionieren der Fokusposition im Wölbungsmittelpunkt kann einem dieser Zustände entsprechen.

Bei einer Weiterbildung des Verfahrens und der Anordnung umfasst die auf das Kalibrierobjekt eingestrahlte Strahlung einen zumindest abschnittsweise in einem Winkel zu der Sensorachse verlaufenden Strahlengang. Insbesondere umfasst dieser Strahlengang wenigstens (oder auch genau) zwei in Richtung der Fokusposition konvergierend zueinander verlaufende Strahlen. Ferner wird der Zielzustand vorzugsweise dann erreicht, wenn die von dem Kalibrierobjekt rückreflektierte Strahlung entlang dieses Strahlengangs reflektiert wird. Mit anderen Worten kann der Zielzustand dann erreicht sein, wenn auf das Kalibrierobjekt eingestrahlte Strahlen in sich selbst zurückreflektiert werden und/oder senkrecht auf der gewölbten Oberfläche des Kalibrierobjekts stehen. Dies kann insbesondere die etwaigen konvergierend zueinander verlaufenden Strahlen des Strahlengangs betreffen, die entsprechend senkrecht auf die gewölbte Oberfläche treffen können. Ist ein solcher Zustand erreicht, kann die erfassbare Strahlungsleistung der reflektierten Strahlung besonders hoch und insbesondere maximal ausfallen. Somit kann präzise ermittelt werden, dass der Zielzustand erreicht ist, sodass eine entsprechend genaue Kalibrierung der Sensoreinrichtung erfolgen kann.

Bei einer Ausführungsform des Verfahrens und der Anordnung hat die in einem Raumwinkelbereich unter verschiedenen Richtungen auf das Kalibierobjekt einfallende Strahlung jeweils (d. h. jede Strahlung bzw. jeder Strahlungsanteil oder jeder Einzelstrahl) einen unter einem Winkel (der auch 0° betragen kann) zu der Sensorachse auf die gewölbte Oberfläche auftreffenden Strahlungsweg und der Zielzustand ist dann erreicht, wenn die von dem Kalibrierobjekt in dem Raumwinkelbereich rückreflektierte Strahlung jeweils auf demselben Strahlungsweg von der gewölbten Oberfläche zurück reflektiert wird. Bei dem Raumwinkelbereich kann es sich um den gesamten Bereich handeln, in dem die Sensoreinrichtung Strahlung auf die gewölbte Oberfläche einstrahlt (bspw. wenn das Kalibrierobjekt kugelförmig ist). Ist das Kalibrierobjekt zylindrisch, kann es sich bei dem Raumwinkelbereich um einen kreisförmig linienartigen Bereich handeln oder ein solcher von dem Raumwinkelbereich umfasst sein. Im Falle einer nur teilweise kugelförmigen Oberfläche würde der Raumwinkelbereich nur den entsprechenden kugelförmigen Teilbereich enthalten. Bei sämtlichen vorstehend genannten Kalibrierobjekt ist ein entsprechender Raumwinkelbereich definier- und ein Zielzustand erreichbar, bei dem ein zumindest lokales Maximum der reflektierten Strahlungsleistung erreicht wird.

Die Erfinder haben erkannt, dass der Zustand der maximalen Reflexion und/oder der Reflexion der eingestrahlten Strahlen in sich selbst insbesondere dann erreicht wird, wenn die Fokusposition in einem vorbestimmten Abstand relativ zu einer gewölbten Oberfläche des Kalibrierobjekts angeordnet wird. Beispielsweise kann dies dadurch erreicht werden, dass die Fokusposition in einer einen etwaigen Wölbungsmittelpunkt und insbesondere Kugelmittelpunkt enthaltenen Ebene innerhalb oder außerhalb des Kalibrierobjekts angeordnet wird und/oder direkt auf einem solchen Mittelpunkt liegt. Beispielsweise kann bei einer bezogen auf den Wölbungsmittelpunkt konvex gewölbten Oberfläche des Kalibrierobjekts dann der Fall eintreten, dass die von der Sensoreinrichtung eingestrahlte Strahlung zumindest teilweise senkrecht auf einem bestrahlten Oberflächensegment steht, wodurch eine entsprechend erhöhte bzw. maximale Reflexion der Strahlung durch das Kalibrierobjekt erzielbar ist. Ein Vorteil der Positionierung im Wölbungsmittelpunkt ist, dass dies zuverlässig detektierbar ist (z. B. als Maximalwert der reflektierten Strahlungsleistung). Insbesondere im Vergleich zu einer Intensitätsverteilung beim Positionieren einer Fokusposition auf der Objektoberfläche wird hier ein schmaler Intensitätspeak bzw. eine schmale Streuung oder Verteilung um den Maximalwert erzielt. Relativverschiebung zum Wölbungsmittelpunkt können somit als deutliche Intensitätsänderungen zuverlässig detektiert werden.

Der Zielzustand kann somit allgemein mit einer vorbestimmten Relativanordnung der Fokusposition und des Kalibrierobjekts einhergehen bzw. nur bei einer entsprechend eindeutigen Relativanordnung erreicht werden. Das Erreichen dieser Relativanordnung kann somit anhand das Erkennens des Erreichens des Zielzustandes präzise erkannt werden, und umgekehrt.

Bei einer Weiterbildung von Anordnung und Verfahren sind die Koordinaten (und/oder die Lage) der Fokusposition und eines Wölbungsmittelpunkts der gewölbten Oberfläche in einem vorbestimmten Koordinatensystem zumindest näherungsweise bekannt und die Sensoreinrichtung und das Kalibrierobjekt werden darauf basierend relativ zueinander angeordnet (zum Beispiel im Rahmen eines ersten Anordnens und/oder zum Definieren eines Ausgangszustands, von dem aus der Zielzustand erreicht werden soll). Dies kann einer vorstehend erläuterten Grobanordnung oder -positionierung entsprechen. Es versteht sich daher, dass zum Erreichen des Zielzustandes weitere Änderungen der Relativanordnung und insbesondere das Ausführen von Relativbewegungen von Fokusposition und Kalibrierobjekt vorgesehen sein können. Wie geschildert, können die Lage der Fokusposition und des Kugelmittelpunkts zum Beispiel mittels einer bisher ausgeführten Kalibrierung durch Abtasten einer Kugeloberfläche ermittelt werden. Bei dem Koordinatensystem kann es sich um ein Gerätekoordinatensystem handeln. Durch Vorgeben von Bewegungsanweisungen an das Positioniersystem auf Basis der bekannten Koordinaten können daraufhin die Fokusposition und das Kalibrierobjekt relativ zueinander angeordnet werden, insbesondere derart, dass die Fokusposition auf dem Wölbungsmittelpunkt zumindest näherungsweise positioniert wird. Insbesondere kann vorgesehen sein, dass die Sensoreinrichtung zu Beginn eines Prozesses, dessen Ende das Erreichen des Zielzustands ist, so angeordnet wird, dass die näherungsweise bekannte Fokusposition und der näherungsweise bekannte Wölbungsmittelpunkt übereinstimmen.

Eine weitere Variante des Verfahrens und der Anordnung sieht vor, dass die Fokusposition zum Erreichen des Zielzustands in einer Ebene verschoben wird (z.B. durch ein Verschieben der Sensoreinrichtung relativ zu dem Kalibrierobjekt und/oder Ändern einer Ausrichtung der Sensoreinrichtung relativ zu dem Kalibrierobjekt). Bei der Ebene kann es sich um eine Querschnittsebene des Kalibrierobjekts oder eine Ebene außerhalb des Kalibrierobjekts handeln, die beispielsweise der gewölbten Flächen gegenüberliegt. Insbesondere kann es sich um eine Ebene handeln, die wenigstens einen vorbestimmen Punkt enthält, beispielsweise den Wölbungsmittelpunkt und insbesondere einen Kugelmittelpunkt eines kugelförmigen Kalibrierobjekts. Die Fokusposition kann in dieser Ebene zum Beispiel im Rahmen einer Grobanordnung bzw. -positionierung positioniert werden.

Ob dies erfolgt ist und/oder ob ein etwaiger vorbestimmter Fokuspunkt in dieser Ebene erreicht wurde, kann z.B. anhand der Messsignale einer insbesondere konfokalen Sensoreinrichtung ermittelt werden. Das zu einer vorbestimmten Wellenlänge bzw. Fokusposition gehörige Messsignal kann bei einem Bewegen der Sensoreinrichtung entlang einer Kalibrierrichtung (die zum Beispiel entlang einer näherungsweise ermittelten Sensorachse verläuft) sowie während weiteren Bewegungen der Fokusposition relativ zu dem Kalibrierobjekt bzw. der gewölbten Oberfläche in dieser Ebene überwacht werden, insbesondere während Bewegungen in wenigstens zwei in einem Winkel zueinander verlaufenden Richtungen. Parallel hierzu können erneut die Messsignale der Sensoreinrichtung (insbesondere die erfassbare reflektierte Strahlungsleistung) überwacht werden und wenn diese die vorbestimmte Bedingung erfüllen und insbesondere einen lokalen oder absoluten Maximalwert (zum Beispiel in einer Intensitätsverteilung) erreichen, kann auf das Erreichen des Zielzustandes geschlossen werden.

Insbesondere wenn ein konfokaler oder interferometrischer Sensor verwendet wird, kann iterativ vorgegangen werden und können z. B. mehrere Bewegungen entlang der Sensorachse (z. B. bis zu verschiedenen Punkten entlang dieser Achse) und auch quer hierzu ausgeführt werden. Mit anderen Worten kann iterativ in mehreren vorzugsweise zueinander parallelen Ebenen verlagert werden. Aus der Gesamtheit der dabei aufgezeichneten Werte kann dann auf das Erreichen des Zielzustands geschlossen werden, z. B. durch Identifizieren eines Maximal- oder Minimalwerts oder dem Erreichen von Schwellenwerten. Wird ein chromatisch-konfokaler Sensor verwendet, kann ebenfalls z. B. iterativ versucht werden, mit einer bestimmten Fokusposition hiervon den Zielzustand zu erreichen. Alternativ kann im Rahmen einer Grobpositionierung eine aus der Mehrzahl von Fokuspositionen voraussichtlich bereits in der oben genannte Ebene positioniert sein, sodass eine Verschiebung relativ zur Sensorachse dazu führt, dass mit dieser Fokusposition der Zielzustand erreicht wird.

In diesem Zusammenhang kann ferner vorgesehen sein, dass die Ebene orthogonal zu der (vorzugsweise zumindest näherungsweise oder grob bekannten) Sensorachse verläuft. Anders ausgedrückt kann die Fokusposition somit radial und/oder orthogonal zu der Sensorachse verschoben werden. Dies kann durch Ändern der Relativanordnung von Sensoreinrichtung und Kalibrierobjekt erfolgen, wobei wenigstens eine von Sensoreinrichtung und Kalibrierobjekt bewegt werden kann (z.B. mittels eines Positioniersystems bzw. Koordinatenmessgeräts). Dies kann insbesondere dann relevant sein, wenn die Lage der Sensorachse z.B. im Rahmen einer Vorkalibrierung zumindest näherungsweise ermittelt wurde.

Alternativ oder zusätzlich kann vorgesehen sein, dass die Ebene, in der das Verschieben der Fokusposition erfolgt, orthogonal zu einer Achse (z.B. einer Kalibrierachse) verläuft, entlang derer die Sensoreinrichtung bewegt wird, um die Fokusposition insbesondere erstmals in der Ebene anzuordnen. Hierbei kann es sich um eine geradlinige Bewegungsachse handeln, entlang derer die Sensoreinrichtung z.B. solange bewegt wird, bis das Erreichen der Ebene durch die Fokusposition anhand der Messsignale der Sensoreinrichtung erkannt wird (zum Beispiel da eine Strahlungsleistung maximal wird). Wie erläutert, ist es für die Robustheit und insbesondere Verkürzung der Messdauer aber vorteilhaft, wenn anhand verfügbarer Informationen eine Grobpositionierung erfolgt und nicht primär iterativ vorgegangen werden muss.

Das Verschieben der Fokusposition in der Ebene und insbesondere in den vorstehend erläuterten orthogonalen Richtungen bietet den Vorteil, dass hierüber eine exaktere Anordnung der Fokusposition innerhalb der Ebene und insbesondere relativ zu einem und gegebenenfalls auf einen vorbestimmten Punkt in der Ebene möglich ist. Die Erfinder haben erkannt, dass im Zusammenspiel mit der bestrahlten gewölbten Oberfläche des Kalibrierobjekts Verschiebungen innerhalb der Querschnittsebene mit zuverlässig detektierbaren Zuständen der Anordnung und/oder zuverlässig detektierbaren Verfahrenszuständen einhergehen können. Dies gilt z.B. deshalb, da das Ausmaß an erfassbaren Rückreflexionen in Abhängigkeit eines Abstandes der Fokusposition zu einem vorbestimmten Bereich oder Punkt innerhalb der Ebene variieren kann. Insbesondere kann sich entsprechend dieses Abstandes auch der Einfallswinkel relativ zu der gewölbten Oberfläche des Kalibrierobjekts ändern. Erst wenn der vorbestimmte Punkt erreicht wurde, kann hingegen der Fall eintreten, dass das maximale Ausmaß der Reflexion erreicht wird, da die auf die gewölbte Oberfläche eingestrahlte Strahlung dann einen vorbestimmten und vorzugsweise senkrechten Winkel relativ zu dieser Fläche aufweist. Somit kann durch das Verschieben der Fokusposition in der Ebene und durch das vorzugsweise parallele Überwachen und/oder Auswerten der Messsignale präzise ermittelt werden, ob die Ebene und/oder ein vorbestimmter Punkt darin im Fokus liegt.

Eine Weiterbildung von Verfahren und Anordnung sieht vor, dass die Strahlungsleistung und insbesondere das etwaige Erfüllen der Bedingung indirekt bzw. mittelbar erfasst wird. Insbesondere können hierfür eine (zum Beispiel während einer Belichtungszeitdauer) erfasste Intensität, eine Intensitätsverteilung oder eine Zeitdauer zum Erreichen eines vorbestimmten Intensitätsgrenzwertes herangezogen werden (sh. a. nachstehender Aspekt), aus denen sich auf eine vorliegende Strahlungsleistung schließen lässt. Somit kann auch vorgesehen sein, dass kein exakter Wert für die Strahlungsleistung ermittelt wird.

Gemäß einem weiteren Aspekt von Verfahren und Anordnung ist die vorbestimmte Bedingung eine der folgenden und/oder wird das Erreichen oder Überschreitens eines Strahlungsleistungs-Grenzwerts wie folgt erkannt:
- Eine zum Beispiel während einer definierten Belichtungszeitdauer erfasste Intensität der erfassten reflektierten Strahlung mit der wenigstens einen Wellenlänge erreicht einen vorbestimmten Schwellenwert (insbesondere einen zumindest lokalen Maximalwert) und/oder ist maximal;
- Eine Zeitdauer, die zum Erreichen eines vorbestimmten aufintegrierten Intensitätswerts von erfasster reflektierter Strahlung mit der wenigstens einen Wellenlänge erforderlich ist, erreicht einen vorbestimmten Schwellenwert (insbesondere einen zumindest lokalen Minimalwert) und/oder ist minimal;
- Die erfasste rückreflektierte Strahlungsleistung ist lediglich einer aus einer Mehrzahl von Fokuspositionen und/oder lediglich der wenigstens einen Wellenlänge zuzuordnen;
- der als Interferenzeigenschaft ermittelte Kontrast eines auf Basis der reflektierten Strahlung ermittelten Interferenzsignals ist maximal und/oder erreicht einen vorbestimmten Schwellenwert.

Hierbei sind auch Kombinationen möglich, beispielsweise um das Erfüllen der Bedingung auf mehrfache (d.h. redundante) und somit besonders zuverlässige Weise zu erkennen. Sofern hierin von Maximalwerten oder Minimalwerten gesprochen wird, können diese in Abhängigkeit der Relativbewegung von Fokusposition zum Objekt und den dabei ermittelbaren Werteverläufen festgestellt werden, d. h. auch lediglich lokale Maxima/Minima in einem entsprechenden Werteverlauf betreffen und nicht zwingend absolute Maxima/Minima, da derartige Werte maßgeblich von dem bestrahlten Kalibrierobjekt abhängen können.

Für den (Interferenz-) Kontrast werden Referenzstrahl und Messstrahl (d.h. der in die Umgebung ausgesendete sowie von der Probe reflektierte Strahl) einander zu einem Interferenzsignal überlagert, wobei zwischen Referenz- und Messstrahl kontrolliert unterschiedliche Phasenverschiebungen eingebracht werden und dabei eine resultierende modulierte Intensität der überlagerten Strahlung bzw. des Interferenzsignals als Funktion der Phasenverschiebung ausgewertet wird. Der Kontrast wird hierbei typischerweise als Verhältnis von (maximum - minimum)/(maximum + minimum) bezogen auf die während der Phasenverschiebungen erfasste Intensität des Interferenzsignals definiert. Das Interferenzsignal wird somit auf Basis der erfassten reflektierten Strahlung bzw. auf Basis der Phase der reflektierten Strahlung erzeugt.

Die Zeitdauer zum Erreichen des vorbestimmten aufintegrierten Intensitätswertes kann beispielsweise mittels einer Auswerteeinrichtung bestimmt und/oder direkt als ein Messsignal der Sensoreinrichtung ausgegeben werden. In diesem Fall kann die Intensität der erfassten reflektierten Strahlung über die Zeit aufintegriert werden und wenn diese Intensität einen vorbestimmten Schwellenwert erreicht, kann die bisher abgelaufene Zeitdauer ermittelt werden. Fällt die ermittelte Zeitdauer kurz aus, bedeutet dies, dass die Intensität der reflektierten Strahlung und somit die Strahlungsleistung vergleichsweise hoch ist. Läuft diese Zeitdauer bereits nach einem vorbestimmten Schwellen- und insbesondere Minimalwert ab, kann ebenfalls erkannt werden, dass ein maximales Ausmaß an Strahlungsreflexion und insbesondere eine Strahlungsleistung über einem vorbestimmten Grenzwert vorliegt. In einer Variante wird zunächst das Erreichen einer maximalen Intensität (als vorbestimmter materialunabhängiger Schwellenwert) abgewartet und daraufhin eine reduzierte Belichtungszeitdauer als ein oberer Grenzwert eingestellt. Zusätzlich oder alternativ kann aus den während eines Messvorgangs für das Erreichen des vorbestimmten Intensitätswerts ermittelten Belichtungszeitdauern ein Minimum bestimmt werden, das das Erreichen der Bedingung anzeigt.

Bei konstanter Belichtungszeit kann hingegen aus den während eines Messvorgangs insgesamt ermittelten Intensitätswerten ein Maximum bestimmt werden, das das Erreichen der Bedingung anzeigt.

Der Fall, dass die erfasste rückreflektierte Strahlung lediglich einer aus einer Mehrzahl von Fokuspositionen zuzuordnen ist, ist insbesondere für chromatisch-konfokale Sensoreinrichtungen relevant. In diesem Fall kann ein Messsignal z.B. eine Intensitätsverteilung mit einer Mehrzahl lokaler maximaler Intensitäten umfassen und jedes lokale Maximum kann einer bestimmten Fokusposition sowie Wellenlänge der Strahlung zuordenbar sein. Wird in einem solchen Fall ein Zustand erreicht, bei der lediglich ein einziges Intensitätsmaximum innerhalb der Verteilung vorliegt, kann daraus geschlossen werden, dass aktuell lediglich Strahlung rückreflektiert wird, die einer bestimmten Wellenlänge sowie der dazugehörigen Fokusposition zuzuordnen ist. Dies ist darauf zurückzuführen, dass die Strahlung in einem größtmöglichen Ausmaß auf die Sensoreinrichtungen (zum Beispiel einen etwaigen Lichtleiter) rückreflektiert wird. Dies bedeutet ferner, dass eine erfasste Strahlungsleistung der reflektierten Strahlung besonders hoch ausfällt und insbesondere einen Maximalwert erreicht oder überschreitet.

Eine Weiterbildung von Anordnung und Verfahren sieht vor, dass das geschilderte Vorgehen hinsichtlich dem Anordnen von Fokusposition und Kalibrierobjekt zum Erreichen des Zielzustandes für wenigstens zwei unterschiedliche Fokuspositionen durchgeführt wird. Im Detail kann die Sensoreinrichtung eine Mehrzahl von Fokusposition aufweisen und das Verfahren für wenigstens zwei unterschiedliche Fokuspositionen durchgeführt werden, wobei bei jedem Verfahrensdurchgang Positionsinformationen beim Erreichen des Zielzustands ermittelt werden sowie eine Ausrichtung der Sensorachse basierend auf den insgesamt ermittelten Positionsinformationen bestimmt wird. Insbesondere kann für jede der Fokuspositionen zum Beispiel die Position der Sensoreinrichtung, bei der der vorbestimmte Zustand erreicht wird, als eine Positionsinformation erfasst und eine Ausrichtung der Sensorachse basierend auf den insgesamt (d. h. über sämtliche Verfahrensdurchgänge) ermittelten Positionsinformationen bestimmt werden.

Bei der Positionsinformation kann es sich um eine Position der Sensoreinrichtung (bspw. eines Ursprungs eines Sensorkoordinatensystems hiervon) in Gerätekoordinaten handeln. Alternativ kann z.B. anhand der Messsignale der Sensoreinrichtung eine Positionsinformation bezüglich des Kalibrierobjekts ermittelt werden, z.B. hinsichtlich einer Lage eines Wölbungs- oder Kugelmittelpunktes. Beispielsweise können die Positionsinformationen im Rahmen eines jeweiligen Verfahrensdurchgangs ermittelte Wölbungsmittelpunktkoordinaten betreffen.

Werden wenigstens zwei Positionsinformationen ermittelt, kann eine Gerade ermittelt werden, die sich durch anhand der Positionsinformationen definierte Punkte und/oder Koordinaten erstreckt, wobei diese Gerade die Sensorachse annähern kann.

Eine Ausführungsform des Verfahrens und der Anordnung sieht vor, dass eine Ausrichtung der Sensorachse und die Koordinaten eines Wölbungsmittelpunkts der gewölbten Oberfläche in einem vorbestimmten Koordinatensystem zumindest näherungsweise bekannt sind und die Sensoreinrichtung und das Kalibrierobjekt darauf basierend relativ zueinander angeordnet werden. Hierbei kann es sich erneut um eine Grobanordnung bzw. Grobpositionierung handeln, der zum Erreichen des Zielzustandes noch weitere Relativbewegungen folgen. Zusätzlich oder alternativ kann die (insbesondere konfokale) Sensoreinrichtung entlang der Sensorachse auf das Kalibrierobjekt zu bewegt und können Messsignale vorzugsweise parallel dazu überwacht werden, beispielsweise bis diese einen Maximalwert zum Beispiel bezogen auf den während der Bewegung ermittelten Werteverlauf annehmen (zum Beispiel wenn die Messsignale die Strahlungsleistung und/oder Strahlungsintensität betreffen). Dies kann als ein Zustand betrachtet werden, in dem die Fokusposition eine den Wölbungsmittelpunkt enthaltene Ebene erreicht hat. Anschließend kann die Relativanordnung von Sensorrichtung und Kalibrierobjekt weiter angepasst oder, mit anderen Worten, verfeinert werden), bis der Zielzustand erreicht ist (insbesondere durch Verlagern der Fokusposition in der Ebene). Die Ausrichtung der Sensorachse kann gemäß einer der nachstehenden Varianten ermittelt werden. Die Koordinaten des Wölbungsmittelpunkts können zum Beispiel durch Abtasten der gewölbten Oberfläche mit einem Referenztaster ermittelt werden.

Die Erfindung betrifft ferner eine Anordnung, mit:
- einem Positioniersystem (insbesondere ein Koordinatenmessgerät),
- einem Kalibrierobjekt (insbesondere eine Kalibrierkugel), das wenigstens eine gewölbte Oberfläche aufweist;
- einer optischen Sensoreinrichtung, die dazu eingerichtet ist, elektromagnetische Strahlung mit wenigstens einer Wellenlängen entlang einer Sensorachse auszusenden und diese Strahlung in einer Fokusposition entlang einer Sensorachse zu fokussieren (d. h. die Sensoreinrichtung weist wenigstens eine Fokusposition auf); und
- einer Steuereinrichtung, die dazu eingerichtet ist, die Anordnung zum Durchführen der folgenden Maßnahmen zu veranlassen (oder, mit anderen Worten, anzusteuern):
   Einstrahlen von elektromagnetischer Strahlung entlang der Sensorachse auf eine gewölbte Oberfläche eines Kalibrierobjekts und Erfassen von Strahlung, die von dem Kalibrierobjekt reflektiert wird;
   Anordnen der Sensoreinrichtung und des Kalibrierobjekts relativ zueinander, so dass die Fokusposition in einem Abstand zu der gewölbten Oberfläche angeordnet ist und ein Zielzustand erreicht ist, in dem eine erfassbare Strahlung insbesondere reflektierte Strahlungsleistung der zu der Fokusposition zugehörigen Wellenlänge (oder, mit anderen Worten, von reflektierter Strahlung mit einer zu der Fokusposition gehörigen Wellenlänge) oder eine auf Basis der erfassbaren reflektierten Strahlung ermittelte Interferenzeigenschaft eine vorbestimmte Bedingung erfüllt.

Die Anordnung kann jegliche Weiterbildung und jegliches weitere Merkmal umfassen, um sämtliche der vorstehenden oder nachstehenden Schritte, Betriebszustände und Funktionen bereitzustellen oder auszuführen. Insbesondere kann die Anordnung dazu eingerichtet sein, ein Verfahren gemäß jeglichem der vorstehenden oder nachstehenden Aspekte auszuführen.

Im Folgenden wird eine Ausführungsform der Erfindung anhand der beigefügten schematischen Figuren erläutert. In Ihrer Art und/oder Funktion übereinstimmende Merkmale können dabei figurenübergreifend mit den gleichen Bezugszeichen versehen sein. Es stellen dar:
- Fig. 1:: eine Ansicht einer erfindungsgemäßen Anordnung, mit der erfindungsgemäße Verfahren ausführbar sind;
- Figs. 2 - 3:: optische Erfassungen eines kugelförmigen Kalibrierobjekts gemäß Stand der Technik;
- Fig. 4:: eine Erfassung eines kugelförmigen Kalibrierobjekts mit der Anordnung aus Figur 1;
- Fig. 5:: ein Verändern einer Relativanordnung von einer Sensoreinrichtung zu dem Kalibrierobjekt mit der Anordnung aus Figur 1;
- Fig. 6: eine Darstellung der Auswirkungen des Veränderns der Relativanordnung aus Figur 5;
- Fig. 6a: ein Beispiel für das Erfassen eines alternativen Kalibrierobjekts; und
- Fig. 7: ein Beispiel für eine Vorkalibrierung zum Ermitteln der Lage einer Sensorachse.

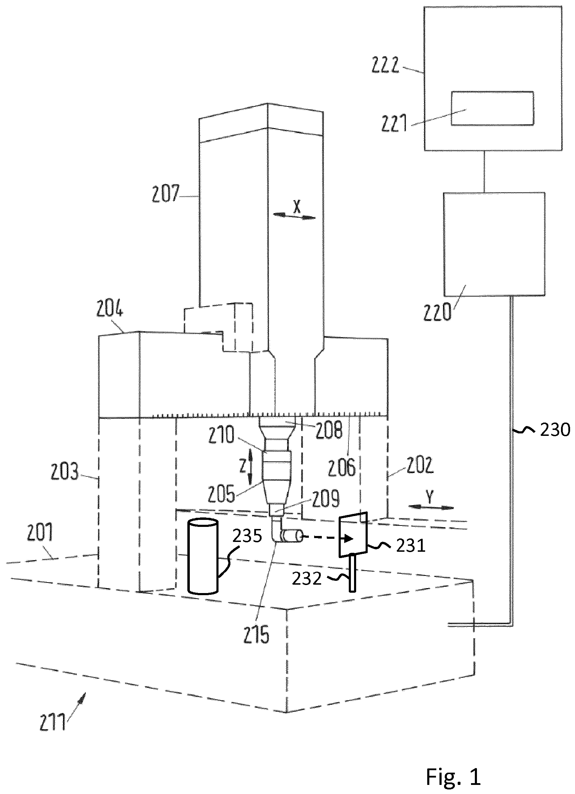

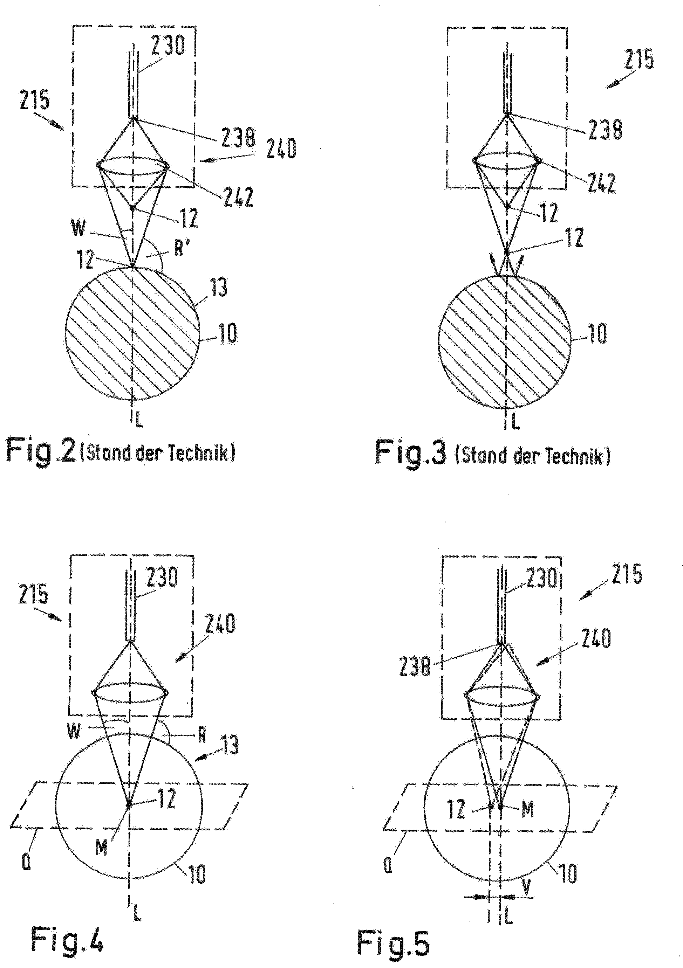

Die in Figur 1 und 2 dargestellte Anordnung umfasst ein Koordinatenmessgerät (KMG) 211 in Portalbauweise, welches einen Messtisch 201 aufweist, über dem Säulen 202, 203 in Y-Richtung eines kartesischen Koordinatensystems beweglich angeordnet sind. Die Säulen 202, 203 bilden zusammen mit einem Querträger 204 ein Portal des KMG 211. Der Querträger 204 ist an seinen gegenüberliegenden Enden mit den Säulen 202 bzw. 203 verbunden. Nicht näher dargestellte Elektromotoren verursachen die Linearbewegung der Säulen 202, 203 in Y-Richtung, entlang der Bewegungs-Achse, die in Y-Richtung verläuft. Dabei ist z. B. jeder der beiden Säulen 202, 203 ein Elektromotor zugeordnet. Der Querträger 204 ist mit einem Querschlitten 207 kombiniert, welcher z. B. luftgelagert entlang dem Querträger 204 in X-Richtung des kartesischen Koordinatensystems beweglich ist. Die momentane Position des Querschlittens 207 relativ zu dem Querträger 204 kann anhand einer Maßstabsteilung 206 festgestellt werden. Die Bewegung des Querschlittens 207 entlang der Bewegungs-Achse in X-Richtung wird durch zumindest einen weiteren Elektromotor (nicht dargestellt) angetrieben. An dem Querschlitten 207 ist eine in vertikaler Richtung bewegliche Pinole 208 gelagert, die an ihrem unteren Ende über eine Montageeinrichtung 210 und eine Drehvorrichtung 205 mit einer Wechselschnittstelle 209 verbunden ist, an die eine Sensoreinrichtung in Form eines Weißlichtsensor 215 über eine abgewinkelte Halterung angekoppelt ist. Die Messrichtung des Weißlichtsensors 215 verläuft aufgrund der Abwinkelung etwa parallel zur X-Y-Ebene. Die Wechselschnittstelle 209 kann angetrieben durch einen weiteren Elektromotor relativ zu dem Querschlitten 207 in Z-Richtung, entlang der Z-Bewegungs-Achse, des kartesischen Koordinatensystems bewegt werden. Durch die Elektromotoren des KMG kann der an die Wechselschnittstelle 209 angekoppelte Weißlichtsensor 215 in dem Bereich unterhalb des Querträgers 204 in nahezu beliebige Positionen bewegt werden. Ferner kann die Drehvorrichtung 205 den Weißlichtsensor 215 um die Z-Achse drehen, sodass der Weißlichtsensor 215 in unterschiedliche Richtungen ausgerichtet werden kann. Alternativ kann eine Drehvorrichtung anstelle der Drehvorrichtung 205 verwendet werden, die andere Freiheitsgrade der Bewegung ermöglicht, z.B. eine zusätzliche Drehbeweglichkeit um eine Drehachse, die senkrecht zu der Vertikalen (Z-Richtung) verläuft.

Das KMG 211 bildet ein Positioniersystem zum Einstellen und Variieren einer Relativanordnung des Weißlichtsensors 215 zu dem stationären Messtisch 201 und den nachfolgend erläuterten darauf anordenbaren Komponenten.

Dargestellt ist ferner eine Auswerteeinrichtung 220, die die Messsignale des Weißlichtsensors 215 über eine schematisch dargestellte Verbindung 230 empfängt. Bei der Verbindung 230 kann es sich z.B. um einen Lichtleiter wie ein Glasfaserkabel handeln. Die Verbindung 230 ist obwohl in Figur 1 und 2 nicht zwingend erkennbar unmittelbar an dem Weißlichtsensor 215 angeschlossen.

Ferner ist in Figur 1 und 2 schematisch eine Steuereinrichtung 222 des KMG 211 dargestellt, die insbesondere die Antriebe (z.B. die o.g. Elektromotoren) steuert. Insbesondere ist die Steuereinrichtung 222 dazu in der Lage, durch Steuerung der Antriebe den Weißlichtsensor 215 in eine gewünschte Position zu verfahren und auch die Drehvorrichtung 205 anzusteuern, um den Weißlichtsensor 215 in eine gewünschte Messrichtung auszurichten.

Die Steuereinrichtung 222 ist ferner mit einem Datenspeicher 221 kombiniert, in dem Informationen über einen Zusammenhang zwischen Messsignalen des konfokalen Weißlichtsensors 215 und einem tatsächlichen Abstand des Weißlichtsensors 215 zu einem Messobjekt 235 (und auch dem nachfolgend erläuterten Kalibrierobjekt) abgespeichert sind. Wie nachstehend erläutert, ist es für die Erfindung aber nicht zwingend, dass derartige Informationen von vornherein verfügbar sind. Insbesondere kann eine optionale Vorkalibrierung auch ohne eine bereits erfolgte Linearisierung stattfinden.

Im Folgenden wird auf die in dem Datenspeicher 221 hinterlegten Informationen unter der Bezeichnung "Linearisierungsparameter" Bezug genommen, obwohl der Begriff Linearisierungsparameter lediglich eine spezielle Art solcher Informationen bezeichnet. In dem Datenspeicher 221 können alternativ oder zusätzlich Informationen anderer Art als Linearisierungsparameter betreffend des Zusammenhangs zwischen den Messsignalen des Weißlichtsensors 215 und dem tatsächlichen Abstand des Weißlichtsensors 215 zu einem Messobjekt gespeichert sein. In jedem Fall sind die gespeicherten Informationen jeweils einem bestimmten Weißlichtsensor 215 zugeordnet, d.h. auch typgleichen Weißlichtsensoren 215 sind separate Informationen zugeordnet, auf die im Folgenden unter dem Begriff Linearisierungsparameter Bezug genommen wird.

Üblicherweise wird beim Betrieb von konfokalen Weißlichtsensoren 215 eine Linearisierung der Sensor-Messsignale bezüglich des tatsächlichen Abstands des Weißlichtsensors 215 von einem Messobjekt 235 vorgenommen. Üblich ist dabei die Durchführung einer Referenzmessung beim Hersteller des Weißlichtsensors 215 oder in einem zertifizierten Messlabor. Bei der Linearisierung werden Werte-Paare, jeweils bestehend aus einem Sensorsignal (d. h. Messsignal) oder mehreren Sensorsignalen und dem zugehörigen Abstandsmesswert eines zusätzlichen Abstandsmesssystems aufgenommen. Insbesondere durch ein Modell, das das Verhalten des Weißlichtsensors 215 abhängig vom Objekt-Abstand beschreibt, wird die Linearisierung vorgenommen. Bei dem Modell kann es sich z.B. um ein mathematisches Modell handeln, beispielsweise mit Polynomen und/oder Splines, die das Verhalten beschreiben. Alternativ oder zusätzlich kann es sich um physikalisches Modell handeln, das z.B. die Funktion der Fokussieroptik des Weißlichtsensors 215 beschreibt. Üblicherweise wird das Ergebnis der Linearisierung in dem Datenspeicher einer Steuereinheit des Weißlichtsensor-Systems abgespeichert. Steuereinheit und Weißlichtsensor 215 werden zusammen an den Anwender ausgeliefert, wobei die Steuereinheit auch in die Auswerteeinrichtung 220 oder die Steuereinrichtung 222 aus Figur 1 integriert sein kann.

Im Gegensatz zu der Linearisierung beim Hersteller oder im Prüflabor wird in dem gezeigten Beispiel eine Referenzmessung unter Verwendung eines Koordinatenmessgeräts 211 durchgeführt, während der Weißlichtsensor 215 an dem KMG 211 angekoppelt ist. Dies wird in der DE 10 2015 217 637 A1 in Bezug auf die dortigen Figuren 1 und 2 näher erläutert. Hierfür ist der Weißlichtsensor 215 über die Wechselschnittstelle 209 an der Pinole 208 angekoppelt. Auf dem Messtisch 201 befindet sich ein Referenzkörper 231, z.B. eine planparallele Glasscheibe, wobei der Referenzkörper 231 über eine Stütze 232 auf dem Messtisch 201 abgestützt ist. Im Ausführungsbeispiel bleibt der Referenzkörper 231 relativ zu dem Messtisch 201 während der Referenzmessung ortsfest. Dagegen wird der Weißlichtsensor 215 vorzugsweise ausschließlich durch Bewegung der Säulen 202, 203 in Y-Richtung in verschiedene Positionen bezüglich des Messtisches 201 und damit auch bezüglich des Referenzkörpers 231 gebracht. In Figur 1 ist der Weißlichtsensor 215 in einer dieser Relativpositionen dargestellt. Durch einen gestrichelten Pfeil ist angedeutet, dass der Weißlichtsensor 215 auf den Referenzkörper 231 ausgerichtet ist. In jeder Relativposition strahlt der Weißlichtsensor 215 seine Messstrahlung auf den Referenzkörper 231 ein, wird die Messstrahlung zumindest an der dem Weißlichtsensor 215 zugewandten Vorderseite reflektiert und wird die auf den Weißlichtsensor 215 zurückreflektierte Messstrahlung von diesem erfasst.

Außerdem wird für jede der Relativpositionen aus dem Positionsmesssystem des KMG 211 die Position des Weißlichtsensors 215 ermittelt (d. h. in Gerätekoordinaten ermittelt). Vorher, oder alternativ auch nach der Referenzmessung, wird die Position des Referenzkörpers 231 bezüglich des Messtisches 201 oder bezüglich eines anderen Referenzortes im Koordinatensystem des KMG 211 ermittelt (d. h. in Gerätekoordinaten ermittelt). Möglich ist es z.B., dass vor oder nach dem in Figur 1 dargestellten angekoppelten Zustand des Weißlichtsensors 215 an der Pinole 208 ein anderer Sensor (z.B. ein taktiler Taster) an die Pinole 208 angekoppelt wird. Der andere Sensor kann als ein Referenztaster oder eine Referenz-Sensoreinrichtung bezeichnet werden. Mit dem taktilen Taster wird dann die Oberfläche des Referenzkörpers 231 angetastet und so die exakte Position zumindest bezüglich der Y-Richtung und vorzugsweise auch bezüglich der X- und Z-Richtung ermittelt.

Über eine nicht dargestellte Signalleitung empfängt die Steuereinrichtung 222 die Ergebnisse der Positionsbestimmung durch das Positionsmesssystem des KMG 211, sowohl während der Referenzmessung als auch optional bei Antastung durch einen taktilen Taster oder bei Abtastung durch einen anderen Sensor, der an dem KMG 211 angekoppelt ist. Außerdem empfängt die Auswerteeinrichtung 220 während der Referenzmessung die Messsignale des Sensors 215. Z. B. können sowohl die Ergebnisse der Positionsmessung als auch die Messsignale des Weißlichtsensors 215 (oder daraus weiter verarbeitete Signale) mit einer Zusatzinformation versehen werden, die eine Zuordnung der Positionsmessergebnisse zu den Messsignalen des Weißlichtsensors 215 oder dem weiter verarbeiteten Signalen ermöglicht. Ein Beispiel hierfür ist eine fortlaufende Nummerierung der Wertepaare oder die Hinzufügung eines Zeitstempels, der die Messzeit wiedergibt.

Die Auswerteeinrichtung 220 oder die Steuereinrichtung 222 ermitteln aus den während der Referenzmessung aufgenommenen Messdaten, die aus den Messsignalen des Weißlichtsensors 215 und aus dem Positionsmesssystem des KMG 211 erhalten wurden, den Zusammenhang zwischen Messsignalen des konfokalen Weißlichtsensors 215 und dem tatsächlichen Abstand des Weißlichtsensors 215 zu einem Messobjekt 235 für den Betriebszustand des Weißlichtsensor-Systems, der bei Ankopplung des Weißlichtsensors 215 an dem KMG gegeben ist. Die Linearisierungsparameter, also die Ergebnisse dieses Zusammenhangs, werden in dem Datenspeicher 221 abgespeichert, vorzugsweise mit Zusatzinformation, die den zugehörigen Weißlichtsensor 215, für den die Referenzmessung durchgeführt wurde, eindeutig bezeichnet.

In einem späteren Messbetrieb (oder auch die nachfolgend erläuterten Kalibrierverfahren bzw. -betrieb) des KMG 211 wird mit dem an der Pinole 208 angekoppelten Weißlichtsensor 215 ein Messobjekt 235 bzw. Kalibrierobjekt 10 vermessen. Im Messbetrieb misst der Weißlichtsensor 215 zumindest einen Abstand eines Oberflächenpunktes des Messobjektes 235 und das Positionsmesssystem des KMG 211 ermittelt die zugehörige Position und Ausrichtung des Sensors 215, z.B. in einem bezüglich des Messtisches 201 ortsfesten Koordinatensystem (Gerätekoordinaten) des KMG 211. Dabei wird der von dem Weißlichtsensor 215 gemessene Abstand zu dem Messobjekt 235 von der Auswerteeinrichtung 220 ermittelt, die unter Verwendung der in dem Datenspeicher 221 abgespeicherten Linearisierungsparameter aus den Messsignalen des Weißlichtsensors 215 zumindest einen Abstandsmesswert erzeugt. Dieser zumindest eine Messwert wird dann insbesondere von der Auswerteeinrichtung 220 zu der Steuereinrichtung 222 übertragen, die auch die Positionsmesswerte des Positionsmesssystems des KMG 211 erhält und daraus Koordinaten das Oberflächenpunktes des Messobjekts 235 berechnet. Analog kann auch im Rahmen des nachstehenden Kalibrierverfahrens vorgegangen werden, wobei jedoch kein allgemeines Messobjekt 235, sondern ein Kalibrierobjekt 10 erfasst wird.

Vorstehend wurde eine Linearisierung des Weißlichtsensors 215 in einem direkt an einem Koordinatenmessgerät 211 montierten Zustand erläutert. Für das vorliegende Kalibrierverfahren ist aber ebenso möglich, einen bei einem Hersteller bereits linearisierten Weißlichtsensor 215 zu verwenden.

Nicht dargestellt in Figur 1 ist ferner ein in den nachfolgenden Figuren erläutertes Kalibrierobjekt in Form einer Einmesskugel 10. Diese wird anstelle des Referenzkörpers 231 auf dem Messtisch 201 des KMG 211 positioniert.

Weiter wurde bei dem vorstehend geschilderten Messbetrieb davon ausgegangen, dass das Positionsmesssystem des KMG 211 die Position und Ausrichtung des Weißlichtsensors 215 und somit auch die Koordinaten einer oder sämtlicher Fokuspositionen hiervon beispielsweise in Gerätekoordinate kennt oder ermitteln kann. Dies erfordert eine möglichst genaue Kalibrierung des Weißlichtsensors 215 insbesondere in der Weise, dass die Koordinaten eines vermessenen Objektpunktes, für den ein Abstandswert ermittelt wurde, in Gerätekoordinaten transformierbar sind (d.h. in KMG-Koordinaten rückführbar sind). Bildlich gesprochen kann mittels der Kalibrierung eine präzise Transformation des Sensorkoordinatensystems, in dem zum Beispiel der Abstandswert und/oder eine Koordinate des erfassten Objektpunktes ermittelbar ist, in das Gerätekoordinatensystem erreicht werden und zwar unabhängig davon, welche Fokusposition aktuell auf einem zu vermessenden Objektbereich liegt. Die Kalibrierung kann darin resultieren, dass Koordinaten eines Objektpunkts in einem Gerätekoordinatensystem, die mit verschiedenen Sensoren erfassten werden (zum Beispiel mit der zu kalibrierenden Sensoreinrichtungen 215 und einem Referenztaster), mit einer ausreichenden Genauigkeit übereinstimmen.

Zunächst wird anhand von Fig. 2 ein Kalibriervorgang erläutert, wie er bisher im Stand der Technik üblich ist. Dabei ist in den nachfolgenden Figuren 2 bis 5 jeweils nur ein Ausschnitt auf die Anordnung aus Fig. 1 gezeigt, wobei die Blickperspektive einer Draufsicht auf den Messtisch 201 entspricht. Weiter sind die dargestellten Komponenten gegenüber der Darstellung aus Fig. 1 teilweise geschnitten und/oder vereinfacht abgebildet.

In Fig. 2 erkennt man zunächst einzelne Komponenten des Weißlichtsensors 215, ohne dass dessen in Fig. 1 erkennbare Abwinkelung und/oder zylindrischen Gehäuseteile dargestellt sind. Man erkennt einen in den Weißlichtsensor 215 mündenden Abschnitt der Lichtleiter-Verbindung 230, der konzentrisch zu dessen in Fig. 1 horizontal abgewinkelten Bereich verläuft. Die Lichtleiter-Verbindung 230 weist eine vergleichsweise klein dimensionierte kreisrunde Austrittsöffnung 238 mit einem Durchmesser von wenigen Mikrometern auf. Der gezeigte Abschnitt der Verbindung 230 definiert eine Längsachse L, entlang derer auch die elektromagnetische (Mess-) Strahlung austritt, wenn auch zumindest teilweise in einem Winkel hierzu. Die Längsachse L entspricht einer Sensorachse des Weißlichtsensors 215 und steht senkrecht auf einer Fläche der Austrittsöffnung 238.

Der Weißlichtsensor 215 umfasst ferner eine Sensoroptik in Form einer Fokussieroptik 240. Diese umfasst eine Sammellinse 242, welche die sich ausgehend von der Austrittsöffnung 238 aufweitende Strahlung bündelt. Genauer gesagt wird die Messstrahlung von der Sammellinse 242 wieder auf die Sensorachse L zusammengeführt, und zwar in der Weise, dass sie auf eine gemeinsame Fokusposition 12 bzw. einen Fokuspunkt auf der Sensorachse L zusammenfällt. Sowohl bei der Sensorachse L als auch bei der Fokusposition 12 handelt es sich um virtuelle bzw. imaginäre Merkmale des Sensors 215, deren Position und/oder Ausrichtung jedoch über die Sensoroptik 240 definiert einstellbar und/oder hieraus ermittelbar ist.

Da es sich bei dem gezeigten Weißlichtsensor 215 um einen chromatisch-konfokalen Weißlichtsensor handelt, werden über die Sensoroptik 240 mehrere Fokuspositionen 12 entlang der Sensorachse L definiert, und zwar mehrere Fokuspositionen 12, die jeweils einer einzelnen Wellenlängen der Messstrahlung zugeordnet sind und Strahlung mit der entsprechenden Wellenlänge in der dazugehörigen Fokusposition 12 zusammenführen. Mit anderen Worten wird also eine Mehrzahl von wellenlängenspezifischen Fokuspositionen 12 definiert. In Fig. 2 sind beispielhaft lediglich zwei derartige Fokuspositionen 12 gezeigt, von denen sich eine exakt auf der Oberfläche der Einmesskugel 10 befindet.

Weiter erkennt man, dass für jede der Fokusposition 12 ein Strahlengang ausgehend von der Austrittsöffnung 238 mit wenigstens zwei gesondert dargestellten Strahlen existiert, die in einem Winkel zu der Sensorachse L verlaufen. Die Strahlen verlaufen zunächst divergierend, bis sie auf die Sammellinse 242 treffen und von dieser in zueinander konvergierender Weise auf die Sensorachse L bzw. Fokusposition 12 zusammengeführt werden.

Um eine Kalibrierung des Weißlichtsensors 215 gemäß Stand der Technik durchzuführen, wird die Messstrahlung des Weißlichtsensor 215 auf die im Schnitt dargestellte Einmesskugel 10 gerichtet, welche ein Kalibrierobjekt bzw. Kalibriernormal bildet. Die Einmesskugel 10 wird auf dem Messtisch 201 aus Fig. 1 positioniert und liegt dem Weißlichtsensor 215 gegenüber. Analog zu dem vorstehend geschilderten Erfassen des Referenzkörpers 213 kann der Weißlichtsensor 215 auf die Einmesskugel 10 zu bewegt werden, bis durch die Auswerteeinrichtung 220 für eine Wellenlänge eine vorbestimmte Intensität der rückreflektierten Strahlung ermittelt wird. Ist dies der Fall, liegt eine zu dieser Wellenlänge gehörige Fokusposition 12 exakt auf der Oberfläche der Einmesskugel 10. Die eingestrahlte Strahlung wird dann zumindest teilweise zurück auf die Sammellinse 242 der Fokussierrichtung 240 reflektiert und von dort auf die Austrittsöffnung 238 abgebildet und in den Lichtleiter 230 sowie in Richtung der Auswerteeinrichtung 220 zurückgeführt. Wie einleitend geschildert, ist dies gegenüber der hierin offenbarten Lösung nachteilig, da z. B. Strahlung erfasst und ausgewertet wird, die lediglich durch einen einzelnen Punkt und nicht durch ein Oberflächensegment reflektiert wird.

Wenn eine Fokusposition 12 unmittelbar auf der gewölbten Kugeloberfläche 13 positioniert ist, liegt ein hohes Ausmaß (und genauer gesagt eine hohe Intensität und/oder Strahlungsleistung) der von dem Weißlichtsensor 215 erfassbaren reflektierten Strahlung vor. Dies betrifft insbesondere Strahlung mit einer zu dieser Fokusposition 12 zugehörigen Wellenlänge. Befindet sich die Fokusposition 12 hingegen nicht auf der Kugeloberfläche, sondern darüber, wird lediglich ein geringeres Ausmaß der eingestrahlten Strahlung zurück auf die Öffnung 238 des Lichtleiters 230 abgebildet. Dieser Zustand ist in Fig. 3 gezeigt, bei dem beide Fokuspositionen 12 oberhalb der Kugeloberfläche 10 liegen und, wie durch entsprechende Pfeile angedeutet, ein großer Anteil der eingestrahlten Messstrahlung nicht mehr auf die Sammellinse 242 zurückreflektiert und somit auch nicht auf die Öffnung 238 abgebildet wird. Varianten, bei denen sich die Fokusposition 12 in einem Abstand zu der Einmesskugel 10 und zum Beispiel in einer Querschnittsebene hiervon befindet, sind im Stand der Technik bisher nicht vorgesehen.

Zum Kalibrieren der Sensoreinrichtung 215 können gemäß dem Stand der Technik in der anhand von Fig. 2 erläuterten Weise mehrere verschiedene Punkte auf der Kugeloberfläche erfasst und als Koordinatenwerte abgespeichert werden. Insbesondere kann erkannt werden, dass eine Fokusposition 12 auf der Kugeloberfläche liegt. In diesem Zustand kann ein Abstandswert zur Einmesskugel 10 und können daraus Koordinaten des erfassten Punktes auf der Kugeloberfläche ermittelt werden (d.h. der Weißlichtsensor 215 wurde für das Kalibrierverfahren bereits linearisiert). Zur Koordinatenbestimmung wird auf eine bekannte Kugelposition und insbesondere Mittelpunktsposition sowie einen aus den erfassten Punkten berechneten Kugelmittelpunkt zurückgegriffen und können die zunächst erfassten Punktkoordinaten auf Basis eines Verhältnisses (insbesondere einer Differenz) der bekannten und berechneten Positionswerte angepasst werden. Werden entsprechende Koordinatenwerte für mindestens drei verschiedene Punkte auf der Kugeloberfläche ermittelt, können hieraus Kugelmittelpunktskoordinaten der Einmesskugel 10 berechnet werden.

Zusätzlich kann die Einmesskugel 10 analog zu dem Referenzkörper 231 aus Fig. 1 von einem bekannten Referenz-Taster abgetastet werden. Auch auf diese Weise können Koordinaten von zum Beispiel wenigstens drei Oberflächenpunkten der Einmesskugel 10 bestimmt und die Koordinaten eines Kugelmittelpunkts berechnet werden. Der Kugelmittelpunkt entspricht zumindest näherungsweise den tatsächlich vorliegenden Verhältnissen, da die Eigenschaften (insbesondere die Position und Ausrichtung) des Referenztasters in Gerätekoordinaten bekannt sind und somit die Koordinaten der Oberflächenpunkte präzise ermittelbar sind.

Aus dem Unterschied der mit der zu kalibrierenden optischen Sensoreinrichtung in Form des Weißlichtsensors 215 ermittelten Kugelmittelpunktskoordinaten und den mit dem Referenztaster ermittelten Kugelmittelpunktskoordinaten können Kalibrierparameter bestimmt werden. Insbesondere können die Kalibrierparameter dazu verwendet werden, um mit dem Weißlichtsensor 215 ermittelte Abstandswerte und/oder Punktkoordinaten zu korrigieren und/oder in Gerätekoordinaten zu transformieren. Die Güte der Kalibrierung hängt z. B. von der Genauigkeit der ermittelten oder angenommenen Sensorrichtung und der Linearisierung ab. Weiter ist es bekannt, dass für linearisierte Sensoren eine sogenannte Nulllage definiert werden kann (in der Regel die Mitte ihres Messbereichs, wobei der Messbereich das Spektrum der erfassbaren Abstandswerte umfasst, prinzipiell aber auch ein beliebiger Abstandswert innerhalb des Messbereichs). Die Nulllage ist ferner in der Weise definiert, dass ihre Lage relativ zu einem Referenzpunkt des Systems bekannt ist (z. B. in Form eines Differenzvektors), was z. B. im Rahmen einer Einmessung bestimmt werden kann. Außerhalb der Nulllage aufgenommene Messwerte können in Sensorrichtung um den gemessenen Abstandswert (bzw. dessen Differenz zum Abstandswert der Nulllage) verschoben werden, um z. B. deren Position in Gerätekoordinaten zu bestimmen. Je weiter von der Nulllage entfernt gemessen wird, desto größer wird der Einfluss von Fehlern aufgrund einer wenig genauen Linearisierung und/oder Richtungsbestimmung.

Es hat sich allerdings gezeigt, dass mit diesem Verfahren nicht immer eine ausreichend genaue Kalibrierung möglich ist. Zunächst ist beim Bestrahlen der Oberfläche einer Einmesskugel 10 (aber auch eines anderen Kalibrierobjekts mit einer gewölbten Oberfläche, zum Beispiel einem Zylinder mit kreisförmiger Grundfläche) der Einfallswinkel W (Akzeptanzwinkel), der von der Messstrahlung und der Sensorachse L eingeschlossen wird, vergleichsweise klein (siehe Figur 2). Dies kann dazu führen, dass nur ein geringer Anteil von Strahlung zurück auf die Öffnung 238 abgebildet und das Erreichen der Kugeloberfläche gegebenenfalls nicht unmittelbar erkannt wird. Weiter kann das gegebenenfalls nur begrenzt genaue Erfassen einer Mehrzahl von Punkten auf der Kugeloberfläche und darauf basierend mittelbarem Berechnen des Kugelmittelpunktes zu unerwünschten Genauigkeitseinbußen führen.

Die nachstehend geschilderten Ausführungsbeispiele der Erfindung sehen stattdessen vor, ein Kalibrierobjekt 10 mit einer gewölbten Oberfläche 13 auf andere Weise optisch zu erfassen und insbesondere derart, dass die Fokusposition 12 als ein virtueller (oder auch imaginärer) Punkt in einem Abstand zu der gewölbten Oberfläche 13 angeordnet ist.

Dies verdeutlicht sich aus der Darstellung von Fig. 4. Dort ist vereinfacht nur eine einzelne Fokusposition 12 für eine einzelne Wellenlänge gezeigt, wobei analog zu den vorstehenden Figuren auch mehrere Wellenlängen samt dazugehöriger Fokuspositionen 12 vorgesehen sind. Der Sensor 215 ist demnach erneut als ein chromatisch-konfokaler Sensor ausgebildet. Ein Krümmungsradius der Kalibrierkugel 10 ist ferner geringer als ein Abstand der Fokusposition 12 zur Sensorobjekt 240 und insbesondere Sammellinse 242.

Man erkennt zunächst die anhand der Figuren 2 und 3 erläuterten Komponenten der als Weißlichtsensor 215 ausgebildeten Sensoreinrichtung in Form der Verbindung 230 und der Fokussieroptik 240. Ferner erkennt man jedoch, dass die Fokusposition 12 (oder zumindest eine aus der Mehrzahl von Fokuspositionen 12) auf einen Kugelmittelpunkt M der Einmesskugel 10 gerichtet bzw. darauf positioniert wurde. Dies ist gleichbedeutend mit dem Erreichen eines Zielzustands. Die Fokusposition 12 ist somit in einem Abstand zu der gewölbten Oberfläche 13 der Einmesskugel 10 angeordnet. Der Kugelmittelpunkt M entspricht einem Wölbungsmittelpunkt der konvex um diesen Kugelmittelpunkt M gewölbten Kugeloberfläche 13. Die Messstrahlung trifft somit nach wie vor auf die gewölbte Oberfläche 13 der Einmesskugel 10, welche das Kalibrierobjekt bildet. Allerdings liegt in diesem Fall die Fokuspositionen 12 nicht mehr direkt auf der Kugeloberfläche 13, sondern ein gegenüber dieser Fokusposition 12 vorgelagerter Strahlungsanteil, wobei diese Strahlung von dem gesamten bestrahlten Oberflächensegment der Einmesskugel 10 reflektiert wird.

In Fig. 4 gesondert hervorgehoben ist, dass dann, wenn die Fokusposition 12 (oder eine der Fokuspositionen 12) mit dem Kugelmittelpunkt M zusammenfällt, ein Winkel R zwischen dem auf die Kugeloberfläche 13 fallenden Strahlungsanteil und eben dieser Kugeloberfläche 13 im Wesentlichen 90° beträgt. Anders ausgedrückt trifft die Strahlung in diesem Fall im Wesentlichen senkrecht auf die Kugeloberfläche, was, wie aus Figur 2 ersichtlich, beim direkten Positionieren einer Fokusposition 12 auf der Kugeloberfläche 13 nicht der Fall ist (siehe Winkel R' in Figur 2). Zudem vergrößert sich der Einfallswinkel zur Sensorachse.

Die Erfinder haben erkannt, dass bei einer entsprechend senkrechten Ausrichtung der einfallenden Strahlung zur Objektoberfläche eine maximale Strahlungsleistung der erfassten rückreflektierten Strahlung vorliegt, was als ein Zielzustand definiert sein kann (d. h. das Erreichen des Maximalwerts der Strahlungsleistung kann es eine vorbestimmte Bedingung definiert sein, bei deren Erfüllung der Zielzustand erreicht ist). Im Fall mehrerer ausgesendeter Wellenlängen samt dazugehöriger Fokuspositionen 12 wird die Strahlungsintensität derjenigen Strahlung als maximal erfasst, die derjenigen Fokusposition 12 zuzuordnen ist, welche aktuell auf dem Kugelmittelpunkt M liegt.

Weiterhin tritt bei dem Zielzustand gemäß Figur 4 der Fall ein, dass Strahlung zum Beispiel entlang der dargestellten äußeren Strahlen des Strahlenganges in sich selbst zurück reflektiert wird, d. h. entlang desselben Strahlengangs oder auch Strahlenverlaufs reflektiert wird, mit der diese Strahlen auf die Einmesskugel 10 gerichtet wurde. Auch dies führt dazu, dass die von dem Kalibrierobjekt 10 reflektierte Strahlung in einem maximalen Ausmaß auf die Öffnung 238 abgebildet wird und somit eine maximale Strahlungsleistung erfassbar ist.

In dem Zielzustand aus Figur 4 können daraufhin Kugelmittelpunktskoordinaten präzise ermittelt werden. Beispielsweise kann der aktuelle Abstandswert des bei diesem Vermessungsvorgang linearisierten Weißlichtsensors 215, dessen Richtung (d. h. Ausrichtung der Sensorachse) bekannt ist, verrechnet werden, um einen Vektor z. B. ausgehend von einer KMG-Sensorschnittstelle zum Kugelmittelpunkt zu erhalten. Hierfür kann man sich zunutze machen, dass, wie oben erläutert, in einer erfassten Intensitätsverteilung der reflektierten Strahlung, das Signal für diejenige Wellenlänge maximal wird, deren Fokusposition sich im Kugelmittelpunkt befindet. Der zu dem ermittelten Sensormesswert bzw. der Intensitätsverteilung dazugehörige und im Rahmen der Linearisierung bestimmte Abstandswert bezieht sich daher ebenfalls auf den Abstand zum Kugelmittelpunkt. Bevorzugt ist der Radius der Einmesskugel 10 ferner derart gewählt, dass von diesem bei einer Positionierung einer oder sämtlicher Fokuspositionen 12 nahe des Kugelmittelpunkts keine erfassbare Strahlung reflektiert wird (d.h. so dass dieser außerhalb des Erfassungsbereichs des Sensors liegt). Falls der Weißlichtsensor 215 nicht linearisiert ist (aber auch allgemein wenn er linearisiert ist), kann er mit seinem als Bezugspunkt definierten Abstandswert (i.d.R. wird die vorstehend erläuterte Mitte des Messbereichs als Nulllage definiert und stellt damit den Bezugspunkt dar) in den Zielzustand gebracht werden. Der Unterschied der in seiner Null erfassten Kugelmittpunktskoordinaten ergibt den Unterschied zu den mit dem Referenztaster bestimmten Kugelmittpunktskoordinaten.

Wie vorstehend allgemein erläutert, können die Kugelmittelpunktskoordinaten ebenfalls mit einem Referenztaster oder einer Referenz-Sensoreinrichtung ermittelt werden und anschließend ein Unterschied der jeweils ermittelten Kugelmittelpunktskoordinaten bestimmt werden, um darauf basierend Kalibrierparameter für den Weißlichtsensor 215 zu bestimmen.

Im Folgenden werden Varianten erläutert, mit denen der Zielzustand aus Figur 4 erreicht werden kann.

Gemäß einer Variante kann der Weißlichtsensor 215 im Rahmen des erfindungsgemäßen Kalibriervorgangs geradlinig auf die Einmesskugel 10 zubewegt werden. Dabei kann der Weißlichtsensor 215 (und/oder deren wenigstens einer Fokuspunkt 12) entlang einer vermuteten oder per nachfolgend erläuterter Vorkalibrierung näherungsweise ermittelten Sensorachse L bewegt werden. Diese Sensorachse L (bzw. die Kalibrierrichtung oder -achse entlang der näherungsweise ermittelten Sensorachse L) kann derart gewählt sein, dass sie einen zum Beispiel mit einem Referenztaster ermittelten Kugelmittelpunkt M schneidet. Parallel hierzu können die Messsignale des Weißlichtsensors 215 überwacht werden. Weisen diese eine vorbestimmte und insbesondere maximale Intensität und/oder Strahlungsleistung für die zu der Fokusposition 12 zugehörige Wellenlänge auf, kann darauf geschlossen werden, dass die Fokusposition 12 eine Ebene Q erreicht hat, welche den Kugelmittelpunkt M enthält. Es kann auch iterativ mehrfach in Sensorrichtung verfahren werden und an jeweils unterschiedlichen Positionen quer hierzu. Hierdurch kann das Erreichen der Ebene Q und insbesondere das Erreichen eines Wölbungsmittelpunkts darin ermittelt werden, z. B. aus einem über sämtlichen Bewegungsvorgänge hinweg ermittelten maximalen Messwert. Diese Variante ist insbesondere für rein konfokale oder interferometrische Sensoreinrichtungen relevant oder falls eine vorbestimmte Fokusposition eines Weißlichtsensors 215 im Wölbungsmittelpunkt M angeordnet werden soll, was aber nicht zwingend ist.

Alternativ kann z. B. auf Basis einer Grobeinmessung (d. h. einem zumindest näherungsweise bekannten Kugelmittelpunkt M und/oder einer zumindest näherungsweise bekannten Fokusposition 12) die Sensoreinrichtung 215 ohne Verfahren in Kalibrierrichtung und Überwachen von Intensitätsänderungen direkt relativ zu der Einmesskugel 10 positioniert werden und kann dies als ausreichend genaues Anordnen der Fokusposition 12 in der Ebene Q angenommen werden.

Bei der Ebene Q handelt es sich in dem gezeigten Beispiel um eine virtuelle Querschnittsebene der Einmesskugel 10, die den Kugelmittelpunkt M enthält. Diese Ebene Q verläuft orthogonal zu der vermuteten Sensorachse L bzw. der Bewegungsrichtung des Weißlichtsensors 215. Bewegungen innerhalb der Querschnittsebene Q erfolgen somit stets orthogonal zur Bewegungsrichtung (bzw. Kalibrierrichtung) und/oder zur Sensorachse L. Auf diese Weise kann eine erste Grobanordnung von Sensoreinrichtung 215 und Einmesskugel 10 erfolgen, wodurch zum Beispiel ein Zustand analog zur nachfolgend erläuterten Figur 5 erreicht werden kann.

Alternativ kann im Rahmen einer Vorkalibrierung eine Lage der Fokusposition 12 vorzugsweise in Gerätekoordinaten zumindest näherungsweise oder grob ermittelt werden. Dies kann anhand der Kalibrierung aus Figur 2 erfolgen. Gleiches gilt für Koordinaten des Kugelmittelpunkts M, die analog zum Vorgehen von Fig. 2 durch Abtasten der Kugeloberfläche 10 mit einem Referenztaster berechnet werden können. Im Rahmen des Kalibriervorgangs von Fig. 4 kann das Koordinatenmessgerät 211 derart angesteuert werden, dass die (vermutete bzw. näherungsweise bekannte) Fokusposition 12 auf den (vermuteten bzw. näherungsweise bekannten) Mittelpunkt M der Einmesskugel 10 zumindest ungefähr zu liegen kommt. Auch auf diese Weise kann eine erste Grobanordnung von Sensoreinrichtung 215 und Einmesskugel 10 erfolgen, wodurch zum Beispiel ein Zustand analog zu nachfolgend erläuterter Figur 5 erreicht werden kann.

Wird nach der entsprechenden ersten (Grob-) Anordnung der Sensoreinrichtung 215 durch das Koordinatenmessgerät 211 zum Beispiel eine maximal erfassbare Intensität der Strahlung mit der zu der Fokusposition 12 zugehörigen Wellenlänge erfasst, ist davon auszugehen, dass die Vorkalibrierung bereits derart genau war, dass die Fokusposition 12 direkt auf den Mittelpunkt M positioniert wurde. In einem solchen Fall wären weitere Verfahrensschritte nicht zwingend notwendig. Insbesondere in Fällen, in denen keine Informationen zur Höhe einer absoluten maximal erfassbaren Intensität (die z. B. auch von den Eigenschaften des Kalibrierobjekts abhängen kann) hinterlegt sind, kann aber auch bei einer hohen gemessenen Anfangsintensität oder prinzipiell infolge jeder Grobpositionierung vorgesehen sein, dass zusätzliche Verfahrbewegungen der Fokusposition 12 stattfinden. Aus den insgesamt ermittelten werden kann z. B. das Maximum der Strahlungsintensität und/oder Minimum der Belichtungszeit ermittelt werden und daraufhin das Erreichen des Zielzustands erkannt werden.

In der Regel wird aufgrund der nur begrenzten Genauigkeit der Vorkalibrierung jedoch ein gewisser Versatz zwischen der Fokusposition 12 und dem Kugelmittelpunkt M vorliegen, wie dies in Figur 5 gezeigt ist. Dies betrifft insbesondere einen lateralen Versatz V innerhalb der einen Kugelmittelpunkt M enthaltenen Querschnittsebene Q der Einmesskugel 10, wie er in Figur 5 gezeigt ist.

In Fig. 5 erkennt man, dass aufgrund des Versatzes V die strichliert angedeutete Strahlung, welche auf den Fokusposition 12 gerichtet ist, nicht vollständig auf die Öffnung 283 der Lichtleiter-Verbindung 230 abgebildet wird, sondern versetzt relativ hierzu verläuft (in Fig. 5 deutlich überhöht dargestellt). Ein solcher Versatz, der die nachfolgend diskutierte Detektiermöglichkeit ermöglicht, tritt insbesondere aufgrund der erfindungsgemäßen Positionierung der Fokusposition 12 in einem Abstand zur Oberfläche auf. Bei einer Positionierung der Fokusposition 12 auf der Oberfläche wäre bei einem Versatz z. B. relativ zu einem idealen Auftreffort an einem Scheitelpunkt der Kugel ein Intensitätsabfall von Strahlung mit zu der Fokusposition 12 gehörigen Wellenlänge erkennbar. Es wäre aber nicht möglich, einen solchen Versatz in Abhängigkeit des Intensitätsverlaufs und insbesondere dem etwaigen Vorhandensein mehrerer lokaler Maxima innerhalb dieses Verlaufs für eine Vielzahl Wellenlängen zu bestimmen, wie bei der nachfolgend erläuterten Detektiermöglichkeit der Fall.

Der Zustand aus Figur 5 führt dazu, dass zunächst eine geringere als die eigentlich erwartete maximale erfassbare Strahlungsleistung der rückreflektierten Strahlung erfasst wird. Um die Fokusposition 12 exakt auf dem Kugelmittelpunkt M zu positionieren, kann mittels des Koordinatenmessgeräts 211 die Sensoreinrichtung 215 und somit die Fokusposition 12 relativ zu der Einmesskugel 10 und deren Kugelmittelpunkt M bewegt werden. Insbesondere kann die Fokusposition 12 innerhalb der Ebene Q und somit senkrecht zur Sensorachse L verlagert werden. Dies erfolgt solange, bis der Zielzustand aus Figur 4 erreicht wird, in dem das Erreichen des Mittelpunkts M zum Beispiel als eine maximale Intensität der erfassten reflektierten Strahlung mit der Wellenlänge der Fokusposition 12 erkannt wird. Wird der Zielzustand jedoch nicht erreicht, kann zum Beispiel die Vorkalibrierung wiederholt und/oder eine Neupositionierung der Fokusposition 12 in der Ebene Q erfolgen.

Wie beschrieben, wird in dem vorliegenden Ausführungsbeispiel davon ausgegangen, dass das Erreichen des Zielzustands durch das Vorliegen einer maximal erfassbaren Strahlungsleistung angezeigt wird, was wiederum durch das Vorliegen einer maximalen Intensität innerhalb einer definierten Belichtungszeit signalisiert wird. Alternativ kann aber ebenso die Zeitdauer betrachtet werden, welche zum Erreichen einer vorbestimmten aufintegrierten Mindestintensität erforderlich ist und die zum Beispiel bei Vorliegen einer minimalen Zeitdauer das Erreichen einer maximalen erfassbaren reflektierten Strahlungsleistung anzeigt.

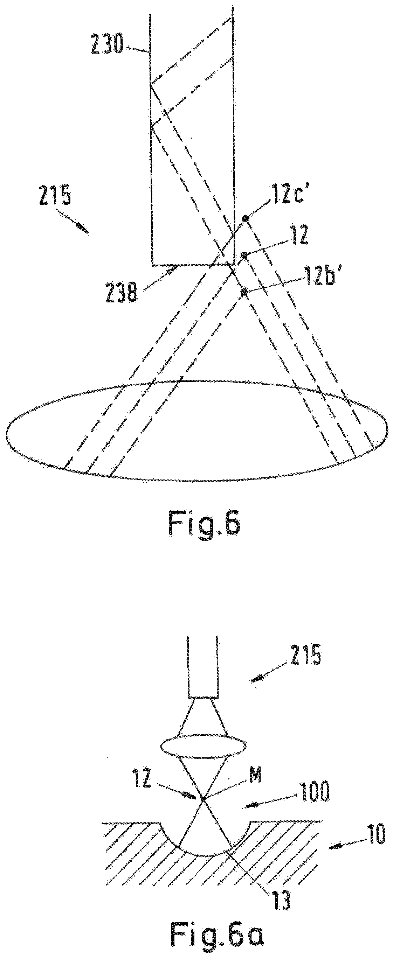

Eine weitere Möglichkeit, das Erreichen des Zielzustands zu erkennen, wird im Folgenden anhand von Figur 6 erläutert. Dabei erkennt man erneut die Auswirkungen des Versatzes V zwischen der Fokusposition 12 und dem Kugelmittelpunkt M, wie er in Fig. 5 dargestellt ist. Aufgrund dieses Versatzes V gelangen bei einer Mehrzahl von Fokuspositionen 12, wie sie die gezeigte chromatisch-konfokale Sensoreinrichtung 215 aufweist, Strahlungsanteile mit mehreren verschiedenen Wellenlängen in die Lichtleiterverbindung 230 bzw. in deren Öffnung 238. In Fig. 6 ist dabei nur der obere Teil der Sensoreinrichtung 215 aus den Figuren 4 und 5 gezeigt (d.h. insbesondere nicht die Einmesskugel 10 sowie die darauf gerichtete Messstrahlung).

Man erkennt, dass aufgrund des Versatzes V aus Figur 5 Strahlung, die zu einer eigentlich aktuell betrachteten Fokusposition 12 gehört, nicht wieder auf die Öffnung 238 der Lichtleiter-Verbindung 230 abgebildet wird (siehe entsprechende Anordnung der abgebildeten bzw. rückreflektierten Fokusposition 12' relativ zur Öffnung 238). Stattdessen gelangt aber Strahlung anderer Wellenlängen und auch mehrerer verschiedener Wellenlängen in die Lichtleiter-Verbindung 230. Hierbei handelt es sich um Strahlung mit Wellenlängen, die zu anderen Fokuspositionen und insbesondere zu den in den Bereich der Öffnung 238 abgebildeten Fokuspositionen 12b', 12c' gehören.

Wie in der DE 10 2015 217 637 A1 im Zusammenhang mit der dortigen Fig. 4 erläutert, würde die Auswerteeinrichtung 220 das Erfassen einer derartigen Mehrzahl von rückreflektierten Strahlungsanteilen mit verschiedenen Wellenlängen als eine Reflexion an unterschiedlichen Materialgrenzflächen interpretieren. Im Rahmen der erfindungsgemäß vorgesehenen Verschiebung der Fokusposition 12 in der Ebene Q kann jedoch erreicht werden, dass analog zu dem Zustand aus Fig. 4 lediglich Strahlung auf die Öffnung 238 abgebildet wird, die einer einzigen Fokusposition 12 zuzuordnen ist (d. h. lediglich Strahlung mit einer einzigen Wellenlänge zurück auf die Öffnung 238 abgebildet wird). Aus Sicht der Auswerteeinrichtung 220 liegt dann anstatt einer Mehrzahl von lokalen Intensitätsmaxima in einer erfassten Intensitätsverteilung der rückreflektierten Strahlung, wie im Fall von Fig. 5 vorhanden, lediglich noch ein einzelnes Intensitätsmaximum innerhalb der gesamten Verteilung vor. Ist dies der Fall, kann darauf geschlossen werden, dass die erfasste reflektierte Strahlungsleistung lediglich einer einzelnen Fokusposition 12 zuzuordnen ist und zwar derjenigen Fokusposition 12, die auf dem Kugelmittelpunkt M positioniert wurde. Dies entspricht dem Zustand aus Fig. 4.

Zusammengefasst sieht das anhand der Figuren 4 und 5 geschilderte Verfahren vor, im Rahmen einer an sich optionalen Vorkalibrierung die Lage (bzw. die Koordinaten) von zumindest einer der Fokuspositionen 12 des Weißlichtsensor 215 in Gerätekoordinaten zu ermitteln. Ferner kann auch die Lage und/oder können die Koordinaten der Querschnittsebene Q und vorzugsweise des Kugelmittelpunkts M ermittelt werden, was ebenfalls in Gerätekoordinaten erfolgen kann. Anschließend wird im Rahmen des eigentlichen (Haupt-) Kalibriervorganges durch Ansteuern der Achsen des Koordinatenmessgeräts 211 eine vorbestimmte Fokusposition 12 des Weißlichtsensors 215 im Kugelmittelpunkt M positioniert. Daraufhin wird das in diesem Zustand erfasste Messsignal ausgewertet und überwacht, während die Fokusposition 12 innerhalb der Querschnittsebene Q verlagert wird. Dies erfolgt solange, bis das Erreichen eines vorbestimmten Zustandes anhand der Messsignale erkannt wird. Dieser Zustand entspricht dem Anordnen des Fokusposition 12 im Kugelmittelpunkt M. Möglichkeiten, um das Erreichen dieses Zustandes anhand der Messsignale zu erkennen, wurden vorstehend erläutert und betreffen z.B. die Höhe der erfassten rückreflektierten Intensität, eine Zeitdauer zum Erreichen einer vorbestimmten aufintegrierten Intensität oder die Anzahl der Maxima in einer ermittelten Intensitätsverteilung. Ist dieser Zustand erreicht, können Kugelmittelpunktskoordinaten (d.h. von der optischen Sensoreinrichtung 315 erfasste Kugelmittelpunktskoordinaten) ermittelt werden.

Zu erwähnen ist ferner, dass im Fall einer interferometrischen Sensoreinrichtung bei einem lateralen Versatz wie in Fig. 6 ähnliche Probleme im Sinne einer mangelnden Einkopplung auftreten. Dies äußert sich in einem Abfall des vorstehend erläuterten Kontrasts des Interferenzsignals.

Werden in der geschilderten Weise für eine Mehrzahl von Fokuspositionen 12 Kugelmittelpunktskoordinaten berechnet (d. h. durch Anordnen einer Mehrzahl von Fokuspositionen 12 im Kugelmittelpunkt M und darauf basierendem Ermitteln der Koordinaten), kann zum Annähern der Sensorachse L eine Gerade durch diese Fokusposition-spezifischen Kugelmittelpunktskoordinaten gebildet werden.

In Figur 6a ist das Erreichen des Zielzustands für ein alternatives geschnitten dargestelltes Kalibrierobjekt 10 gezeigt. Dieses weist eine halbkugelförmige Ausnehmung 100 auf, deren Grundfläche eine (halbkugelförmig) gewölbte Oberfläche 13 bildet, die aber nach wie vor eine Außenfläche des Kalibrierobjekts 10 darstellt. Eine Wölbungsmittelpunkt M liegt deshalb oberhalb von der Ausnehmung 100 und außerhalb des Kalibrierobjekts 10. Wird jedoch die Fokusposition 12 in dem entsprechenden Wölbungsmittelpunkt M angeordnet, ergeben sich gleichartige Reflexionseigenschaften wie anhand von Figur 4 erläutert. Ebenso können Koordinaten dieses Wölbungsmittelpunkts M durch Erfassen der Ausnehmung 100 mit einem Referenztaster ermittelt werden und basierend auf dem Unterschied der jeweiligen Koordinaten eine Kalibrierung vorgenommen werden.

## Patentansprüche

1. Verfahren zum Erfassen eines Kalibrierobjekts (10) mit einer optischen Sensoreinrichtung (215), die eine konfokale oder chromatisch-konfokale optische Sensoreinrichtung ist,
wobei die Sensoreinrichtung (215) dazu eingerichtet ist, elektromagnetische Strahlung mit wenigstens einer Wellenlänge auszusenden und diese Strahlung in einer Fokusposition (12) entlang einer Sensorachse (L) zu fokussieren,
wobei das Verfahren umfasst:
- Einstrahlen von elektromagnetischer Strahlung entlang der Sensorachse (L) auf eine gewölbte Oberfläche (13) des Kalibrierobjekts (10) und Erfassen von Strahlung, die von der gewölbten Oberfläche (13) des Kalibrierobjekts (10) reflektiert wird; wobei die gewölbte Oberfläche (13) eine äußere Oberfläche des Kalibrierobjekts (10) ist und das Kalibrierobjekt (10) für die Strahlung intransparent ist,
- Bewegen der Sensoreinrichtung (215) und des Kalibrierobjekts (10) relativ zueinander unter Überwachen der von der Sensoreinrichtung erzeugten Messsignale bis die Fokusposition (12) in einem Abstand zu der gewölbten Oberfläche (13) angeordnet ist und ein Zielzustand erreicht ist, in dem eine erfassbare reflektierte Strahlungsleistung der zu der Fokusposition (12) zugehörigen Wellenlänge der elektromagnetischen Strahlung eine vorbestimmte Bedingung erfüllt.

2. Verfahren zum Erfassen eines Kalibrierobjekts (10) mit einer optischen Sensoreinrichtung (215), die eine interferometrische Sensoreinrichtung ist,
wobei die Sensoreinrichtung (215) dazu eingerichtet ist, elektromagnetische Strahlung mit wenigstens einer Wellenlänge auszusenden und diese Strahlung in einer Fokusposition (12) entlang einer Sensorachse (L) zu fokussieren,
wobei das Verfahren umfasst:
- Einstrahlen von elektromagnetischer Strahlung entlang der Sensorachse (L) auf eine gewölbte Oberfläche (13) des Kalibrierobjekts (10), und Erfassen von Strahlung, die von der gewölbten Oberfläche (13) des Kalibrierobjekts (10) reflektiert wird; wobei die gewölbte Oberfläche (13) eine äußere Oberfläche des Kalibrierobjekts (10) ist und das Kalibrierobjekt (10) für die Strahlung intransparent ist,
- Bewegen der Sensoreinrichtung (215) und des Kalibrierobjekts (10) relativ zueinander unter Überwachen der von der Sensoreinrichtung erzeugten Messsignale bis die Fokusposition (12) in einem Abstand zu der gewölbten Oberfläche (13) angeordnet ist und ein Zielzustand erreicht ist, in dem ein auf Basis der erfassbaren reflektierten Strahlung ermittelter Kontrast maximal ist.

3. Verfahren nach Anspruch 1 oder 2,
wobei die Sensoreinrichtung (215) auf Basis von wenigstens einem Messwert kalibriert wird, der ermittelt wird, wenn der Zielzustand erreicht ist.

4. Verfahren nach einem der Ansprüche 1 bis 3,
wobei der Zielzustand dann erreicht ist, wenn die Fokusposition (12) in einem Wölbungsmittelpunkt (M) der gewölbten Oberfläche positioniert ist.

5. Verfahren nach einem der vorangehenden Ansprüche,
wobei die in einem Raumwinkelbereich unter verschiedenen Richtungen auf das Kalibierobjekt einfallende Strahlung jeweils einen unter einem Winkel zu der Sensorachse (L) auf die gewölbte Oberfläche (13) auftreffenden Strahlungsweg hat und der Zielzustand dann erreicht ist, wenn die von dem Kalibrierobjekt (10) in dem Raumwinkelbereich rückreflektierte Strahlung jeweils auf demselben Strahlungsweg von der gewölbten Oberfläche (13) zurück reflektiert wird.

6. Verfahren nach einem der vorangehenden Ansprüche,
wobei die Koordinaten der Fokusposition (12) und eines Wölbungsmittelpunkts (M) der gewölbten Oberfläche in einem vorbestimmten Koordinatensystem zumindest näherungsweise bekannt sind und die Sensoreinrichtung (215) und das Kalibrierobjekt (10) darauf basierend relativ zueinander angeordnet werden.

7. Verfahren nach einem der vorangehenden Ansprüche,
wobei die Fokusposition zum Erreichen des Zielzustands in einer Ebene (Q) verschoben wird.

8. Verfahren nach Anspruch 7,
wobei die Ebene (Q) orthogonal zu der Sensorachse (L) verläuft; und/oder
wobei die Ebene (Q) orthogonal zu einer Achse verläuft, entlang derer die Sensoreinrichtung (215) bewegt wird, um die Fokusposition (12) in der Ebene (Q) anzuordnen.

9. Verfahren nach einem der vorangehenden Ansprüche,
wobei die vorbestimmte Bedingung eine der folgenden ist:
- eine Intensität der erfassten reflektierten Strahlung mit der wenigstens einen Wellenlänge erreicht einen vorbestimmten Schwellenwert und/oder ist maximal;
- eine Zeitdauer, die zum Erreichen eines vorbestimmten aufintegrierten Intensitätswerts von erfasster reflektierter Strahlung mit der wenigstens einen Wellenlänge erforderlich ist, erreicht einen vorbestimmten Schwellenwert und/oder ist minimal;
- die erfasste reflektierte Strahlungsleistung ist lediglich einer aus einer Mehrzahl von Fokuspositionen (12) und/oder lediglich der wenigstens einen Wellenlänge zuzuordnen;
- der als Interferenzeigenschaft ermittelte Kontrast eines auf Basis der reflektierten Strahlung ermittelten Interferenzsignals ist maximal und/oder erreicht einen vorbestimmten Schwellenwert.

10. Verfahren nach einem der vorangehenden Ansprüche,
wobei die Sensoreinrichtung (215) eine Mehrzahl von Fokuspositionen (12) aufweist und das Verfahren für wenigstens zwei unterschiedliche Fokuspositionen (12) durchgeführt wird, und
wobei bei jedem Verfahrensdurchgang Positionsinformationen beim Erreichen des Zielzustands ermittelt werden sowie eine Ausrichtung der Sensorachse (L) basierend auf den insgesamt ermittelten Positionsinformationen bestimmt wird.

11. Verfahren nach einem der vorangehenden Ansprüche,
wobei eine Ausrichtung der Sensorachse (L) und die Koordinaten eines Wölbungsmittelpunkts (M) der gewölbten Oberfläche (13) in einem vorbestimmten Koordinatensystem zumindest näherungsweise bekannt sind und die Sensoreinrichtung (215) und das Kalibrierobjekt (10) darauf basierend relativ zueinander angeordnet werden.

12. Anordnung, mit:
- einem Positioniersystem (211),
- einem Kalibrierobjekt (10), das wenigstens eine gewölbte Oberfläche (13) aufweist;
- einer optischen Sensoreinrichtung (215), die eine konfokale oder chromatisch-konfokale optische Sensoreinrichtung und dazu eingerichtet ist, elektromagnetische Strahlung mit wenigstens einer Wellenlänge auszusenden und diese Strahlung in einer Fokusposition (12) entlang einer Sensorachse (L) zu fokussieren; und
- einer Steuereinrichtung, die dazu eingerichtet ist, die Anordnung zum Durchführen der folgenden Maßnahmen zu veranlassen:
• Einstrahlen von elektromagnetischer Strahlung entlang der Sensorachse (L) auf eine gewölbte Oberfläche (13) des Kalibrierobjekts (10) und Erfassen von Strahlung, die von der gewölbten Oberfläche (13) des Kalibrierobjekts (10) reflektiert wird; wobei die gewölbte Oberfläche (13) eine äußere Oberfläche des Kalibrierobjekts (10) ist und das Kalibrierobjekt (10) für die Strahlung intransparent ist,
• Bewegen der Sensoreinrichtung (215) und des Kalibrierobjekts (10) relativ zueinander unter Überwachen der von der Sensoreinrichtung erzeugten Messsignale bis die Fokusposition (12) in einem Abstand zu der gewölbten Oberfläche (13) angeordnet ist und ein Zielzustand erreicht ist, in dem eine erfassbare reflektierte Strahlungsleistung der zu der Fokusposition (12) zugehörigen Wellenlänge der elektromagnetischen Strahlung eine vorbestimmte Bedingung erfüllt.

13. Anordnung, mit:
- einem Positioniersystem (211),
- einem Kalibrierobjekt (10), das wenigstens eine gewölbte Oberfläche (13) aufweist;
- einer optischen Sensoreinrichtung (215), die eine interferometrische Sensoreinrichtung und dazu eingerichtet ist, elektromagnetische Strahlung mit wenigstens einer Wellenlänge auszusenden und diese Strahlung in einer Fokusposition (12) entlang einer Sensorachse (L) zu fokussieren; und
- einer Steuereinrichtung, die dazu eingerichtet ist, die Anordnung zum Durchführen der folgenden Maßnahmen zu veranlassen:
• Einstrahlen von elektromagnetischer Strahlung entlang der Sensorachse (L) auf eine gewölbte Oberfläche (13) des Kalibrierobjekts (10) und Erfassen von Strahlung, die von der gewölbten Oberfläche (13) des Kalibrierobjekts (10) reflektiert wird; wobei die gewölbte Oberfläche (13) eine äußere Oberfläche des Kalibrierobjekts (10) ist und das Kalibrierobjekt (10) für die Strahlung intransparent ist,
• Bewegen der Sensoreinrichtung (215) und des Kalibrierobjekts (10) relativ zueinander unter Überwachen der von der Sensoreinrichtung erzeugten Messsignale bis die Fokusposition (12) in einem Abstand zu der gewölbten Oberfläche (13) angeordnet ist und ein Zielzustand erreicht ist, in dem ein auf Basis der erfassbaren reflektierten Strahlung ermittelter Kontrast maximal ist.

## Claims

1. Method for capturing a calibration object (10) using an optical sensor device (215), which is a confocal or chromatic-confocal optical sensor device,
wherein the sensor device (215) is configured to emit electromagnetic radiation at at least one wavelength and focus said radiation on a focus position (12) along a sensor axis (L),
wherein the method comprises:
- radiating electromagnetic radiation along the sensor axis (L) onto a curved surface (13) of the calibration object (10) and capturing radiation reflected off the curved surface (13) of the calibration object (10), the curved surface (13) being an outer surface of the calibration object (10) and the calibration object (10) being non-transparent to the radiation,
- moving the sensor device (215) and the calibration object (10) relative to each other while monitoring the measurement signals created by the sensor device until the focus position (12) is arranged at a distance from the curved surface (13) and a target state is reached, in which a capturable reflected radiation power of the wavelength of the electromagnetic radiation associated with the focus position (12) fulfils a predetermined condition.

2. Method for capturing a calibration object (10) using an optical sensor device (215), which is an interferometric sensor device, wherein the sensor device (215) is configured to emit electromagnetic radiation at at least one wavelength and focus said radiation on a focus position (12) along a sensor axis (L), wherein the method comprises:
- radiating electromagnetic radiation along the sensor axis (L) onto a curved surface (13) of the calibration object (10), and capturing radiation reflected off the curved surface (13) of the calibration object (10), the curved surface (13) being an outer surface of the calibration object (10) and the calibration object (10) being non-transparent to the radiation,
- moving the sensor device (215) and the calibration object (10) relative to each other while monitoring the measurement signals created by the sensor device until the focus position (12) is arranged at a distance from the curved surface (13) and a target state is reached, in which a contrast ascertained on the basis of the capturable reflected radiation is maximal.

3. Method according to Claim 1 or 2,
wherein the sensor device (215) is calibrated on the basis of at least one measured value that is ascertained when the target state is reached.

4. Method according to any of Claims 1 to 3,
wherein the target state is reached when the focus position (12) is positioned at a centre of curvature (M) of the curved surface.

5. Method according to any of the preceding claims, wherein the radiation incident on the calibration object from different directions in a solid angle range has a radiation path that in each case is incident on the curved surface (13) at an angle to the sensor axis (L) and the target state is reached when the radiation reflected back off the calibration object (10) into the solid angle range is in each case reflected back from the curved surface (13) along the same radiation path.

6. Method according to any of the preceding claims, wherein the coordinates of the focus position (12) and of a centre of curvature (M) of the curved surface are known at least approximately in a predetermined coordinate system, and the sensor device (215) and the calibration object (10) are arranged relative to each other on the basis thereof.

7. Method according to any of the preceding claims, wherein the focus position is displaced in a plane (Q) in order to reach the target state.

8. Method according to Claim 7,
wherein the plane (Q) extends orthogonally to the sensor axis (L); and/or
wherein the plane (Q) extends orthogonally to an axis along which the sensor device (215) is moved in order to arrange the focus position (12) in the plane (Q).

9. Method according to any of the preceding claims, wherein the predetermined condition is one of the following:
- an intensity of the captured reflected radiation at the least one wavelength reaches a predetermined threshold value and/or is maximal;
- a time required to achieve a predetermined integrated intensity value of captured reflected radiation at the at least one wavelength reaches a predetermined threshold value and/or is minimal;
- the captured reflected radiation power can be assigned to only one of a plurality of focus positions (12) and/or to only the at least one wavelength;
- the contrast of an interference signal ascertained on the basis of the reflected radiation, which is ascertained as an interference property, is maximal and/or reaches a predetermined threshold value.

10. Method according to any of the preceding claims,
wherein the sensor device (215) comprises a plurality of focus positions (12), and the method is performed for at least two different focus positions (12), and
wherein position information is ascertained during each iteration of the method when the target state is reached, and an alignment of the sensor axis (L) is determined on the basis of all of the ascertained position information.

11. Method according to any of the preceding claims, wherein an alignment of the sensor axis (L) and the coordinates of a centre of curvature (M) of the curved surface (13) are known at least approximately in a predetermined coordinate system, and the sensor device (215) and the calibration object (10) are arranged relative to each other on the basis thereof.

12. Arrangement, having:
- a positioning system (211),
- a calibration object (10) having at least one curved surface (13);
- an optical sensor device (215) which is a confocal or chromatic-confocal optical sensor device and configured to emit electromagnetic radiation at at least one wavelength and focus said radiation on a focus position (12) along a sensor axis (L); and
- a control device that is configured to cause the arrangement to perform the following measures:
• radiating electromagnetic radiation along the sensor axis (L) onto a curved surface (13) of the calibration object (10), and capturing radiation reflected off the curved surface (13) of the calibration object (10), the curved surface (13) being an outer surface of the calibration object (10) and the calibration object (10) being non-transparent to the radiation,
• moving the sensor device (215) and the calibration object (10) relative to each other while monitoring the measurement signals created by the sensor device until the focus position (12) is arranged at a distance from the curved surface (13) and a target state is reached, in which a capturable reflected radiation power of the wavelength of the electromagnetic radiation associated with the focus position (12) fulfils a predetermined condition.

13. Arrangement, having:
- a positioning system (211),
- a calibration object (10) having at least one curved surface (13);
- an optical sensor device (215) which is an interferometric sensor device and configured to emit electromagnetic radiation at at least one wavelength and focus said radiation on a focus position (12) along a sensor axis (L); and
- a control device that is configured to cause the arrangement to perform the following measures:
• radiating electromagnetic radiation along the sensor axis (L) onto a curved surface (13) of the calibration object (10), and capturing radiation reflected off the curved surface (13) of the calibration object (10), the curved surface (13) being an outer surface of the calibration object (10) and the calibration object (10) being non-transparent to the radiation,
• moving the sensor device (215) and the calibration object (10) relative to each other while monitoring the measurement signals created by the sensor device until the focus position (12) is arranged at a distance from the curved surface (13) and a target state is reached, in which a contrast ascertained on the basis of the capturable reflected radiation is maximal.

## Revendications

1. Procédé permettant de détecter un objet d'étalonnage (10), comprenant un dispositif capteur optique (215) qui est un dispositif capteur optique confocal ou confocal chromatique,
dans lequel le dispositif capteur (215) est conçu pour émettre un rayonnement électromagnétique ayant au moins une longueur d'onde, et pour focaliser ce rayonnement dans une position focale (12) le long d'un axe de capteur (L),
dans lequel le procédé comprend les étapes consistant à :
- irradier un rayonnement électromagnétique le long de l'axe de capteur (L) sur une surface bombée (13) de l'objet d'étalonnage (10), et détecter un rayonnement qui est réfléchi par la surface bombée (13) de l'objet d'étalonnage (10) ; dans lequel la surface bombée (13) est une surface extérieure de l'objet d'étalonnage (10) et l'objet d'étalonnage (10) est opaque au rayonnement,
- déplacer le dispositif capteur (215) et l'objet d'étalonnage (10) l'un par rapport à l'autre en surveillant les signaux de mesure produits par le dispositif capteur jusqu'à ce que la position focale (12) soit disposée à une distance de la surface bombée (13) et qu'un état cible soit atteint dans lequel une puissance de rayonnement réfléchie détectable de la longueur d'onde associée à la position focale (12) du rayonnement électromagnétique satisfait une condition prédéterminée.

2. Procédé permettant de détecter un objet d'étalonnage (10), comprenant un dispositif capteur optique (215) qui est un dispositif capteur interférométrique, dans lequel le dispositif capteur (215) est conçu pour émettre un rayonnement électromagnétique ayant au moins une longueur d'onde, et pour focaliser ce rayonnement dans une position focale (12) le long d'un axe de capteur (L), dans lequel le procédé comprend les étapes consistant à :
- irradier un rayonnement électromagnétique le long de l'axe de capteur (L) sur une surface bombée (13) de l'objet d'étalonnage (10), et détecter un rayonnement qui est réfléchi par la surface bombée (13) de l'objet d'étalonnage (10) ; dans lequel la surface bombée (13) est une surface extérieure de l'objet d'étalonnage (10) et l'objet d'étalonnage (10) est opaque au rayonnement,
- déplacer le dispositif capteur (215) et l'objet d'étalonnage (10) l'un par rapport à l'autre en surveillant les signaux de mesure produits par le dispositif capteur jusqu'à ce que la position focale (12) soit disposée à une distance de la surface bombée (13) et qu'un état cible soit atteint dans lequel un contraste déterminé sur la base du rayonnement réfléchi détectable est maximal.

3. Procédé selon la revendication 1 ou 2,
dans lequel le dispositif capteur (215) est étalonné sur la base d'au moins une valeur de mesure qui est déterminée lorsque l'état cible est atteint.

4. Procédé selon l'une quelconque des revendications 1 à 3,
dans lequel l'état cible est atteint lorsque la position focale (12) est positionnée au centre du bombage (M) de la surface bombée.

5. Procédé selon l'une quelconque des revendications précédentes,
dans lequel le rayonnement incident sur l'objet d'étalonnage dans une plage d'angle solide selon différentes directions présente respectivement un chemin de rayonnement incident sur la surface bombée (13) selon un angle par rapport à l'axe de capteur (L), et l'état cible est atteint lorsque le rayonnement rétro-réfléchi par l'objet d'étalonnage (10) dans la plage d'angle solide est rétro-réfléchi par la surface bombée (13) respectivement sur le même chemin de rayonnement.

6. Procédé selon l'une quelconque des revendications précédentes,
dans lequel les coordonnées de la position focale (12) et d'un centre de bombage (M) de la surface bombée dans un système de coordonnées prédéterminé sont connues au moins approximativement, et le dispositif capteur (215) et l'objet d'étalonnage (10) sont disposés l'un par rapport à l'autre sur cette base.

7. Procédé selon l'une quelconque des revendications précédentes,
dans lequel la position focale est décalée dans un plan (Q) pour atteindre l'état cible.

8. Procédé selon la revendication 7,
dans lequel le plan (Q) s'étend orthogonalement par rapport à l'axe de capteur (L) ; et/ou
dans lequel le plan (Q) s'étend orthogonalement à un axe le long duquel le dispositif capteur (215) est déplacé pour disposer la position focale (12) dans le plan (Q).

9. Procédé selon l'une quelconque des revendications précédentes,
dans lequel la condition prédéterminée est l'une des suivantes :
- une intensité du rayonnement réfléchi détecté ayant ladite au moins une longueur d'onde atteint une valeur seuil prédéterminée et/ou est maximale ;
- une durée qui est nécessaire pour atteindre une valeur d'intensité intégrée prédéterminée d'un rayonnement réfléchi détecté ayant ladite au moins une longueur d'onde atteint une valeur seuil prédéterminée et/ou est minimale ;
- la puissance de rayonnement réfléchie détectée est à associer uniquement à l'une d'une pluralité de positions focales (12) et/ou uniquement à ladite au moins une longueur d'onde ;
- le contraste déterminé comme une propriété d'interférence d'un signal d'interférence déterminé sur la base du rayonnement réfléchi est maximal et/ou atteint une valeur seuil prédéterminée.

10. Procédé selon l'une quelconque des revendications précédentes,
dans lequel le dispositif capteur (215) présente une pluralité de positions focales (12), et le procédé est effectué pour au moins deux positions focales (12) différentes, et
dans lequel à chaque passage du procédé, des informations de position sont déterminées lorsque l'état cible est atteint, et un alignement de l'axe de capteur (L) est déterminé sur la base des informations de position déterminées globalement.

11. Procédé selon l'une quelconque des revendications précédentes,
dans lequel un alignement de l'axe de capteur (L) et les coordonnées d'un centre de bombage (M) de la surface bombée (13) dans un système de coordonnées prédéterminé sont connus au moins approximativement, et le dispositif capteur (215) et l'objet d'étalonnage (10) sont disposés l'un par rapport à l'autre sur cette base.

12. Agencement, comprenant :
- un système de positionnement (211),
- un objet d'étalonnage (10) qui présente au moins une surface bombée (13) ;
- un dispositif capteur optique (215) qui présente un dispositif capteur confocal ou confocal chromatique et est conçu pour émettre le rayonnement électromagnétique ayant au moins une longueur d'onde, et pour focaliser ce rayonnement dans une position focale (12) le long d'un axe de capteur (L) ; et
- un dispositif de commande qui est conçu pour amener l'agencement à prendre les mesures suivantes :
• irradier un rayonnement électromagnétique le long de l'axe de capteur (L) sur une surface bombée (13) de l'objet d'étalonnage (10), et détecter un rayonnement qui est réfléchi par la surface bombée (13) de l'objet d'étalonnage (10) ; dans lequel la surface bombée (13) est une surface extérieure de l'objet d'étalonnage (10) et l'objet d'étalonnage (10) est opaque au rayonnement,
• déplacer le dispositif capteur (215) et l'objet d'étalonnage (10) l'un par rapport à l'autre en surveillant les signaux de mesure produits par le dispositif capteur jusqu'à ce que la position focale (12) soit disposée à une distance de la surface bombée (13) et qu'un état cible soit atteint dans lequel une puissance de rayonnement réfléchie détectable de la longueur d'onde associée à la position focale (12) du rayonnement électromagnétique satisfait une condition prédéterminée.

13. Agencement, comprenant :
- un système de positionnement (211),
- un objet d'étalonnage (10) qui présente au moins une surface bombée (13) ;
- un dispositif capteur optique (215) qui présente un dispositif capteur interférométrique et est conçu pour émettre un rayonnement électromagnétique ayant au moins une longueur d'onde, et pour focaliser ce rayonnement dans une position focale (12) le long d'un axe de capteur (L) ; et
- un dispositif de commande qui est conçu pour amener l'agencement à prendre les mesures suivantes :
• irradier un rayonnement électromagnétique le long de l'axe de capteur (L) sur une surface bombée (13) de l'objet d'étalonnage (10), et détecter un rayonnement qui est réfléchi par la surface bombée (13) de l'objet d'étalonnage (10) ; dans lequel la surface bombée (13) est une surface extérieure de l'objet d'étalonnage (10) et l'objet d'étalonnage (10) est opaque au rayonnement,
• déplacer le dispositif capteur (215) et l'objet d'étalonnage (10) l'un par rapport à l'autre en surveillant les signaux de mesure produits par le dispositif capteur jusqu'à ce que la position focale (12) soit disposée à une distance de la surface bombée (13) et qu'un état cible soit atteint dans lequel un contraste déterminé sur la base du rayonnement réfléchi détectable est maximal.
